# EUROPÄISCHE PATENTSCHRIFT

(11) **EP 2 232 582 B1**
(45) Veröffentlichungstag und Bekanntmachung des Hinweises auf die Patenterteilung: **03.12.2014**
(21) Anmeldenummer: 08870427.5
(22) Anmeldetag: 10.12.2008
(51) Int. Cl.: H01R 4/48, H01R 12/51, H01L 31/048, H01R 9/24, H01R 12/59

(54) **ANSCHLUSSDOSE, VERWENDUNG, SOLARPANEEL, KONTAKTELEMENT, UND VERFAHREN**
SOCKET, USE, SOLAR PANEL, CONTACT ELEMENT, AND METHOD
BOITE DE JONCTION, UTILISATION, PANNEAU SOLAIRE, ELEMENT DE CONTACT ET PROCEDE

(30) Priorität: 08.01.2008 DE 102008003448
(43) Veröffentlichungstag der Anmeldung: 29.09.2010
(73) Patentinhaber: Yamaichi Electronics Deutschland GmbH, 85609 Aschheim-Dornach (DE); YAMAICHI ELECTRONICS CO., LTD., Ohta-ku, Tokyo 143-8515 (JP)
(72) Erfinder: QUITER, Michael, 85560 Ebersberg (DE); BRAUN, Sven, 80687 München (DE)
(74) Vertreter: Müller-Boré & Partner Patentanwälte PartG mbB
(86) Internationale Anmeldenummer: PCT/EP2008/010486
(87) Internationale Veröffentlichungsnummer: WO 2009/086874

(56) Entgegenhaltungen:
- EP-A- 1 601 024
- EP-A- 1 729 348
- DE-B3-102004 020 958
- DE-C1- 19 734 306
- DE-U1- 20 311 183
- DE-U1- 20 311 184

## Beschreibung

Die Erfindung betrifft eine Anschlußdose, eine Verwendung, ein Solarpaneel, ein Kontaktelement und ein Verfahren.

Herkömmliche Solarmodule zur Erzeugung elektrischer Energie aus Sonnenlicht umfassen eine oder mehrere einzelne Solarzellen. Je nach gewünschter vom Solarmodul zur Verfügung zu stellenden Spannung und/oder Stromstärke werden einzelne Solarzellen innerhalb des Moduls parallel und/oder in Reihe geschaltet und damit zu Solarzellengruppen zusammengefaßt. Die Solarzellengruppen werden zu einem flachen Solarmodul zusammengefaßt. Die elektrischen Anschlüsse der Solarzellengruppen des Solarmoduls werden nach außen geführt. Bei partieller Verringerung der Bestrahlungsintensität durch Sonnenlicht auf einzelne Solarzellen bzw. Solarzellengruppen, beispielsweise durch Verschmutzung oder Schattenwurf, können unter anderem folgende Effekte auftreten: (1) Eine (gleichmäßige) Verringerung der Bestrahlungsintensität innerhalb der zusammen geschalteten Solarzellengruppen führt zu einer Leistungsverminderung der jeweiligen Solarzellengruppe. (2) Durch eine partielle Abschattung einer Solarzelle innerhalb einer Solarzellengruppe wirkt diese abgeschattete Solarzelle als Sperrdiode bzw. Widerstand innerhalb des Stromkreises der Solarzellengruppe, was zum einen dazu führen kann, daß die gesamte Solarzellengruppe keine elektrische Energie mehr liefern kann und zum anderen zu einer Beschädigung der abgeschatteten Solarzelle und damit zum dauerhaften Ausfall der Solarzellengruppe führen kann.

In jedem Fall können zwischen den herausgeführten Anschlüssen der Solarzellengruppen eines Solarmoduls, je nach Bestrahlungsintensität auf die einzelnen Solarzellen, unterschiedliche Spannungen anliegen. Eine Reihenschaltung der Solarzellengruppen durch entsprechende Schaltung der nach außen geführten Anschlüsse führt analog zu den oben genannten Problemen.

Um die mit der unterschiedlichen Bestrahlungsintensität der Solarzellen verbundenen Probleme zu vermeiden, werden herkömmlich sogenannte Bypass-Dioden, verwendet, die elektrisch antiparallel zu den Solarzellengruppen geschaltet werden. Diese Bypass-Dioden haben die Wirkung, daß der Stromfluß durch das Solarmodul an Solarzellengruppen, welche eine nur geringe Leistung liefern, vorbei geleitet wird, d.h. die Anschlüsse dieser Solarzellengruppe eines Solarmoduls werden durch die Bypass-Diode kurz geschlossen und die entsprechende Solarzellengruppe dadurch überbrückt. Somit liefert eine solche Solarzellengruppe zwar keinen Anteil mehr zur Gesamtleistung des Solarmoduls, der Gesamtstromfluß durch das Solarmodul ist jedoch im wesentlichen ungehindert und eine Beschädigung einzelner Solarzellen, wird verhindert.

Solarpaneele, umfassen daher neben dem Solarmodul in der Regel eine elektrische Anschlußdose mit zumindest zwei Kontaktvorrichtungen und zumindest einer Bypass-Diode. Die Solarzellen in einem Solarmodul sind in der Regel durch flache dünne Leiterbänder miteinander verbunden. Diese Leiterbänder werden aus dem Solarmodul heraus geführt, und mit in der Anschlußdose angeordneten elektrischen Kontaktelementen kontaktiert. Die Anschlußdose des Solarpaneels weist daher in der Regel auf der dem Solarmodul zugewandten Seite eine Öffnung auf, durch welche die Leiterbänder hindurch geführt und an den Kontaktelementen angeschlossen werden. Die Anschlußdose wird herkömmlicherweise anschließend mit einem isolierenden Harz ausgegossen, um die Anschlußdose und die Leiterbänder fest miteinander zu verbinden und elektrisch voneinander zu isolieren. Das mit der Anschlußdose versehene Solarmodul wird als Solarpaneel bezeichnet.

Abhängig vom Montageverfahren einer Anschlußdose an ein Solarmodul, wobei Anschlußdosen zum Beispiels manuell oder automatisiert an ein Solarmodul montiert werden können, sind die Anschlußdosen für verschiedene Solarmodule verschieden ausgebildet.

Die Druckschrift DE 203 11 184 U1 offenbart eine Anschlußdose zum Anschliessen an ein Solarpaneel mit einem Gehäuse, in dem eine Öffnung zum Zuführen von elektrischen Leitungen des Solarpaneels vorgesehen ist, mit Kontaktelementen zum Anschliessen an die elektrischen Leitungen, mit elektrischen Bauelementen, die an die Kontaktelemente angeschlossen sind, wobei die Bauelemente auf einer Leiterplatte angeordnet sind, und daß die Leiterplatte in dem Gehäuse gehaltert ist.

Die Druckschrift EP 1 729 348 A2 offenbart eine elektrische Anschluß- und Verbindungsdose für ein Solarmodul aus mit dünnen Leiterbändern angeschlossenen Solarzellen, mit einem Gehäuse und in dem Gehäuse vorgesehenen elektrischen und/oder elektronischen Einrichtungen sowie wenigstens einer in dem Gehäuse vorgesehenen und wenigstens eine Klemmeinrichtung aufweisenden elektrischen Anschlußvorrichtung, wobei die Klemmeinrichtung zur Herstellung eines Klemmkontaktes derart ausgebildet und angeordnet ist, daß wenigstens ein aus dem Solarmodul heraus geführtes dünnes Leiterband in zwei unterschiedlichen gegenüberliegenden Einführrichtungen in die Klemmeinrichtung einführbar ist.

Die Druckschrift DE 197 34 306 C1 offenbart eine Hochstromkontakteinrichtung, insbesondere für Kraftfahrzeuge, bestehend aus einem Kabelaufnahmeteil, an welchem ein Hochstrom führendes Kabel mechanisch mit einer Kabelführungsschiene verbindbar ist und einem Kontaktbefestigungsteil zur Befestigung an einer auf einem isolierenden Träger angeordneten Kontaktstelle, wobei das Kabelaufnahmeteil und das Kontaktbefestigungsteil elektrisch und mechanisch über ein Kontaktverbindungsteil miteinander verbunden sind und wobei das Kontaktverbindungsteil mindestens eine Öffnung aufweist.

Die Druckschrift DE 10 2004 020 958 B3 offenbart eine Anschlussklemme für mehrere Leiter, mit einer Stromschiene und mehreren Federklemmanschlüssen zum Kontaktieren der Leiter mit der Stromschiene, wobei mindestens ein erster Federklemmanschluss zur Aufnahme eines Rundleiters durch die Anordnung einer Käfigzugfeder auf einem ersten Ende der Stromschiene ausgebildet ist und mindestens ein zweiter Federklemmanschluss zur Aufnahme eines Flachbandleiters durch die Anordnung einer Sperrhakenfeder auf dem zweiten Ende der Stromschiene ausgebildet ist, wobei der zweite Federklemmanschluss einteilig mit der Stromschiene ausgebildet ist, wobei am zweiten Ende der Stromschiene von einem Seitenrand derselben eine ersten Seitenwand, die rechtwinklig zur Stromschienenebene abgewinkelt ist und als Kontaktschenkel dient, ausgebildet ist, und wobei am gegenüberliegenden Seitenrand der Stromschiene eine zweite Seitenwand, dem Kontaktschenkel gegenüberliegend, ausgebildet ist, von der ein Teil von der Stromschiene freigeschnitten ist, die als Federschenkel dient, wobei der Federschenkel unter einem spitzen Winkel zur Einschubrichtung des zu kontaktierenden Flachbandleiters zum Kontaktschenkel hin abgewinkelt ist, so daß eine Kante des freien Federschenkelendes federnd gegen den Kontaktschenkel vorgespannt ist.

Es ist Aufgabe der Erfindung, eine universelle Anschlußdose bereitzustellen, welche insbesondere im Rahmen verschiedener Montageverfahren eingesetzt werden kann.

Diese Aufgabe wird durch die unabhängigen Ansprüche gelöst. Bevorzugte Ausführungsformen ergeben sich aus den Unteransprüchen.

### Anschlußdose gemäß einem Aspekt

Ein Aspekt der vorliegenden Erfindung betrifft eine Anschlußdose für eine Leiterplatte, insbesondere für ein Solarmodul, gemäß Anspruch 1.

Vorteilhafterweise ist die erfindungsgemäße Anschlußdose zur Verwendung mit unterschiedlich ausgeführten Leiterplatten und zur Verwendung von verschiedenen Kontaktkonfiguration ausgelegt, so daß bei der Bestückung unterschiedlicher Leiterplatten die Anzahl verschiedener zu bevorratenden Anschlußdosen reduziert werden kann. Dadurch werden die Lagerkosten beim Hersteller reduziert. Ferner kann dadurch die Stückzahl der gleichartigen zu produzierenden Anschlußdosen erhöht werden, wodurch sich in der Regel auch die Stückkosten pro Anschlußdose reduzieren.

In anderen Worten ist die Anschlußdose dadurch, daß die Kontaktelemente derart konfiguriert sind, zumindest zwei Kontaktkonfigurationen aufzuweisen, besonders flexibel einsetzbar. Die Anschlußdose ist nicht auf eine Anschlußart beschränkt ist, sondern, da sie zumindest zwei Kontaktkonfigurationen aufweist, auch für verschiedene Anschlußmöglichkeiten ausgelegt. Somit kann die Anschlußdose für verschiedene Anschlußarten und/oder Solarpaneele eingesetzt werden. Beispielsweise kann mittels der ersten Kontaktkonfiguration die Anschlußdose ausgelegt sein, automatisch an ein Solarpaneel angeschlossen werden. Mittels der dritten Kontaktkonfiguration kann die Anschlußdose beispielsweise ausgelegt sein, manuell angeschlossen zu werden. Es sind auch weitere Anschlußmöglichkeiten möglich.

Bevorzugt ist es möglich, daß der elektrische Leiter der Leiterplatte, der das elektrische Kontaktelement kontaktiert bzw. damit in Kontakt gebracht ist, das elektrische Kontaktelement gemäß genau einer Kontaktkonfiguration kontaktiert bzw. damit in Kontakt gebracht ist. Somit kontaktiert der elektrische Leiter das Kontaktelement vorzugsweise nicht gemäß der ersten Kontaktkonfiguration und gleichzeitig gemäß der zweiten Kontaktkonfiguration. Weiterhin kontaktiert der elektrische Leiter das Kontaktelement vorzugsweise nicht gemäß der ersten Kontaktkonfiguration und gleichzeitig gemäß der dritten Kontaktkonfiguration. Außerdem kontaktiert der elektrische Leiter das Kontaktelement vorzugsweise nicht gemäß der zweiten Kontaktkonfiguration und gleichzeitig gemäß der dritten Kontaktkonfiguration. Ebenso kontaktiert der elektrische Leiter das Kontaktelement vorzugsweise nicht gemäß der ersten Kontaktkonfiguration und gleichzeitig gemäß der zweiten Kontaktkonfiguration und gleichzeitig gemäß der dritten Kontaktkonfiguration. Die obigen Ausführungen gelten sinngemäß für das Kontaktelement. Somit ist das Kontaktelement konfiguriert, lediglich mit genau einem elektrischen Leiter der Leiterplatte gemäß genau einer der drei Kontaktkonfigurationen kontaktierbar bzw. in Kontakt bringbar zu sein. In anderen Worten ist das Kontaktelement vorzugsweise konfiguriert, um nicht gleichzeitig mit einem ersten elektrischen Leiter der Leiterplatte gemäß einer der drei Kontaktkonfigurationen kontaktiert zu sein und gleichzeitig einem zweiten elektrischen Leiter der Leiterplatte gemäß einer anderen der drei Kontaktkonfigurationen kontaktiert zu sein.

### Begriffsbestimmungen

Zum einfacheren Verständnis der Erfindung wird nachfolgend eine Vielzahl von Begriffen beispielhaft definiert.

Die Anschlußdose ist auf einer flächigen Leiterplatte anordenbar. Zur eindeutigen Beschreibung von Richtungen und geometrischen Relationen wird in der folgenden Beschreibung davon ausgegangen, daß der im wesentlichen ebene Grundträger der Anschlußdose parallel zu einer ebenen Fläche einer Leiterplatte ausgerichtet ist. Diese ebene Fläche sei durch die zwei orthogonalen Richtungsvektoren der x- und y-Richtung eines kartesischen Koordinatensystems aufgespannt. Senkrecht dazu, also senkrecht zur Ebene der Leiterplatte und des Grundträgers, erstreckt sich die z-Richtung nach oben. Beispielsweise kann die Anschlußdose parallel zu einer horizontalen Fläche einer Leiterplatte ausgerichtet sein und die z-Richtung weist nach oben, d.h. entgegen der Schwerkraftrichtung. Kraft- und/oder Verlagerungsrichtung(en) kann/können in bezug auf das so definierte orthogonale kartesische Koordinatensystem angegeben werden. Wird in der folgenden Beschreibung in Zusammenhang mit einer Richtungsangabe der Begriff "im wesentlichen" verwendet, so bedeutet dies insbesondere, daß die Anzugebende Richtung von der genannten Bezugsrichtung um weniger als etwa ±45 Grad, vorzugsweise um weniger als etwa ±30 Grad, weiter bevorzugt um weniger als etwa ±15 Grad, und besonders bevorzugt um weniger als ±10 Grad, insbesondere um weniger als ±5 Grad.

Die vorgenannten Positionen und Richtungen sind beispielhaft und dienen insbesondere als Referenz zur Beschreibung z.B. von Seiten der Anschlußdose und/oder zur Bestimmung von Richtungen, um beispielsweise eindeutig definierbare bzw. bestimmbare Koordinaten anzugeben. Gegebenenfalls können auch andere Positionen verwendet werden bzw. ein anderes Koordinatensystem.

Der Begriff "im Inneren", wie er in dieser Anmeldung verwendet wird, beschreibt insbesondere einen Volumenbereich bzw. den Raumbereich, der beispielsweise von dem Gehäuse der Anschlußdose umgrenzt wird. Die Umgrenzung muß hierbei nicht vollständig sein, sondern es können beispielsweise auch Öffnungen in dem Gehäuse vorhanden sein. In anderen Worten beschreibt der Begriff "im Inneren" insbesondere das Innenvolumen der Anschlußdose. Hierbei ist es auch nicht notwendig, daß die Anschlußdose geschlossen ist. Beispielsweise kann die Anschlußdose einen Deckel aufweisen und der Deckel nicht an der Anschlußdose angeordnet sein. Trotzdem beschreibt der Begriff "im Inneren" das Innenvolumen, so als ob der Deckel angeordnet wäre. In anderen Worten beschreibt der Begriff "im Inneren" das Innenvolumen einer idealerweise vollständig geschlossenen Anschlußdose. Die Kontaktvorrichtung kann auch derart angeordnet sein, daß ein Teil der Kontaktvorrichtung durch eine entsprechende Öffnung aus der Anschlußdose heraus ragt bzw. heraus geführt ist. Solange jedoch ein Teil bzw. Bereich der Kontaktvorrichtung, insbesondere derjenige Bereich, in bzw. an dem der elektrische Leiter anordenbar ist, innerhalb des Innenvolumens der Anschlußdose angeordnet ist, befindet sich dieser Bereich "im Inneren" der Anschlußdose. Der Begriff "im Inneren" beinhaltet somit sinngemäß z.B. auch "im wesentlichen im Inneren" bzw. auch "zumindest teilweise im Inneren".

Der Begriff "Kraftrichtung" im Sinne dieser Erfindung beschreibt, eine Richtung, entlang welcher eine Kraft angelegt werden kann. Beispielsweise kann die Kraftrichtung K im wesentlichen senkrecht zu einer Bodenfläche bzw. dem Grundträger der Anschlußdose sein. Die "Bodenfläche" ist beispielsweise die Fläche, welche die Öffnungsbereiche enthält und/oder an bzw. auf der die Kontaktvorrichtung(en) angeordnet ist/sind. Beispielsweise kann die Kraftrichtung K im wesentlichen senkrecht zu einer Fläche bzw. Oberfläche der Leiterplatte sein, an bzw. auf der die Anschlußdose angeordnet ist. Es ist auch möglich, daß die Kraftrichtung K mit der Bezugsebene, beispielsweise dem Boden der Anschlußdose und/oder der Oberfläche der Leiterplatte einen Winkel zwischen etwa 85° und etwa 60° einschließt, insbesondere einen Winkel zwischen etwa 80° und etwa 65°, insbesondere einen Winkel zwischen etwa 75° und etwa 70° einschließt. Besonders bevorzugt ist die Kraftrichtung K derart ausgerichtet, daß beim Anlegen einer Kraft entlang der Kraftrichtung K die Anschlußkontaktfeder zumindest bereichsweise, insbesondere entlang der Kraftrichtung K, verlagerbar ist bzw. verlagert wird und/oder zumindest bereichsweise elastisch verformbar ist bzw. verformt wird, d.h. betätigbar ist bzw. betätigt wird. Die Kraftrichtung K weist beispielsweise von der Anschlußdose auf die Leiterplatte hin. Eine Richtung antiparallel zu der Kraftrichtung K weist beispielsweise von der Leiterplatte auf die Anschlußdose hin.

Die zumindest eine Anschlußkontaktfeder und der zumindest eine Anschlußkontaktbereich eines jeden Kontaktelements können relativ zueinander verlagerbar sein. Dabei ist insbesondere die Anschlußkontaktfeder zumindest bereichsweise entlang einer Verlagerungsrichtung V relativ zu dem Anschlußkontaktbereich verlagerbar. In anderen Worten kann/können beispielsweise eine oder mehrere Anschlußkontaktfeder(n) rückstellfähig ausgebildet sein. Die Kraft in Kraftrichtung K kann beispielsweise an die zumindest eine Anschlußkontaktfeder angelegt werden bzw. anlegbar sein. Insbesondere kann sich die Anschlußkontaktfeder bei festgelegtem Anschlußkontaktbereich, insbesondere entlang der Verlagerungsrichtung V, von dem Anschlußkontaktbereich weg bewegen bzw. durch Anlegen einer genügend großen Kraft in Kraftrichtung K Anschlußkontaktfeder von dem Anschlußkontaktbereich wegbewegbar sein. Wenn der Anschlußkontaktbereich ebenfalls federnd bzw. als Feder ausgebildet ist, können sich die Anschlußkontaktfeder und der Anschlußkontaktbereich durch eine beiderseitige Bewegung voneinander weg bewegen.

Der Begriff "Ruheposition", wie er im Sinne der vorliegenden Erfindung verwendet wird, beschreibt beispielsweise den Zustand bzw. die Position eines oder mehrerer elektrischer Bauteile insbesondere des Kontaktelementes bzw. von Bestandteilen des Kontaktelementes. Das Kontaktelement kann beispielsweise eine oder mehrere Aufnahmen bzw. Aufnahmevorrichtungen als bevorzugte(m) Einführbereich(e) aufweisen, in welche externe elektrische Leiter, beispielsweise ein elektrischer Leiter der Leiterplatte einführbar ist. In der Ruheposition der entsprechenden Aufnahme oder des Bauteils, das diese Aufnahme umfaßt, ist beispielsweise der entsprechende externe elektrische Leiter nicht in die Aufnahme eingeführt bzw. kontaktiert diese Aufnahme nicht elektrisch und/oder mechanisch. Der Begriff "Ruheposition", wie er im Sinne der vorliegenden Erfindung verwendet wird, beschreibt insbesondere diejenige Position beispielsweise der Anschlußkontaktfeder, in der sich die Anschlußkontaktfeder befindet, wenn die Anschlußdose nicht mit der Leiterplatte verbunden ist. In anderen Worten ist in der Ruheposition der Anschlußkontaktfeder die Anschlußdose beispielsweise nicht an bzw. auf der Leiterplatte montiert. Zumindest sind in der Ruheposition die elektrischen Leiter noch nicht in den bzw. die Einführbereich(e) eingeführt. Zusätzlich kann in der Ruheposition ein elektrischer und/oder mechanischer Kontakt zwischen der Anschlußkontaktfeder und dem Anschlußkontaktbereich vorliegen. In anderen Worten entspricht die Ruheposition der Anschlußkontaktfeder derjenigen Position in der sich die Anschlußkontaktfeder befindet, wenn keinerlei externe Kraft, insbesondere in Kraftrichtung K an die Anschlußkontaktfeder angelegt ist. In diesem Fall kann jedoch aufgrund der Rückstellfähigkeit der Anschlußkontaktfeder eine Kraft auf die Anschlußkontaktfeder wirken, falls die Anschlußkontaktfeder den Anschlußkontaktbereich mechanisch kontaktiert. Somit ist die Anschlußkontaktfeder nicht in einem entspannten Zustand. Es ist jedoch nicht notwendig, daß in der Ruheposition die Anschlußkontaktfeder den Anschlußkontaktbereich kontaktiert. Die Ruheposition ist in diesem Fall die Position, welche die Anschlußkontaktfeder ohne angelegte Kraft, im wesentlichen im entspannten Zustand einnimmt. Es befindet sich ein Spalt bzw. Freiraum zwischen dem Anschlußkontaktbereich und dem Bereich der Anschlußkontaktfeder, der mit einem elektrischen Leiter in Kontakt bringbar ist.

Der Begriff "Betätigungsposition", wie er im Sinne der vorliegenden Erfindung verwendet wird, beschreibt beispielsweise einen von dem vorgenannten Zustand bzw. der vorgenannten Position verschiedenen Zustand bzw. Position der vorgenannten elektrischen Bauteile, insbesondere des Kontaktelementes. Im Gegensatz zu der Ruheposition wird in der Betätigungsposition eine externe Kraft auf einen oder mehrere Bestandteile der elektrischen Bauteile ausgeübt, d.h. eine Kraft von einem anderen Element, daß insbesondere nicht Bestandteil des Kontaktelements ist und/oder insbesondere nicht der Anschlußkontaktbereich ist. Insbesondere wird in der Betätigungsposition ermöglicht, daß ein oder mehrere elektrische Leiter in den Einführbereich einführbar sind bzw. eingeführt sind. Der Begriff "Betätigungsposition", wie er im Sinne der vorliegenden Erfindung verwendet wird, beschreibt somit insbesondere eine Position gemäß der die Anschlußkontaktfeder und der Anschlußkontaktbereich voneinander beabstandet sind. Beispielsweise kann die Betätigungsposition durch Anlegen einer Kraft in Kraftrichtung K an der Anschlußkontaktfeder erreicht werden. Aufgrund der angelegten Kraft bewegt sich die Anschlußkontaktfeder beispielsweise von der Ruheposition in die Bestätigungsposition. Hierbei kann sowohl ein mechanischer und/oder ein elektrischer Kontakt, insbesondere ein direkter mechanischer und/oder elektrischer Kontakt zwischen der Anschlußkontaktfeder und dem Anschlußkontaktbereich getrennt werden. Beispielsweise kann jedoch auch der Leiter zwischen der Anschlußkontaktfeder und dem Anschlußkontaktbereich angeordnet werden bzw. sein. Besonders bevorzugt ist die Anschlußkontaktfeder rückstellfähig ausgebildet, d.h. sie ist derart elastisch und/oder plastisch verformbar, daß sie nach Einwirken einer verformenden Kraft im wesentlichen wieder in die Ruheposition zurückkehrt.

Der Begriff "Betriebsposition", wie er im Sinne der vorliegenden Erfindung verwendet wird, beschreibt die Position der Bauteile, insbesondere der Anschlußkontaktfeder, in einem betriebsbereiten Zustand der Anschlußdose. Wird die Anschlußkontaktfeder nicht länger betätigt, kann die Anschlußkontaktfeder aufgrund der Federkraft einen eingeführten Leiter gegen den Anschlußkontaktbereich des Kontaktelementes drücken. Je nach Ausgestaltung des Leiters und Federkraft der Anschlußkontaktfeder kann die Anschlußkontaktfeder auch in mechanischen und/oder elektrischen Kontakt mit dem Leiter sein, ohne den Leiter gegen den Anschlußkontaktbereich zu drücken. Befindet sich die Anschlußkontaktfeder in der Betriebsposition, kontaktiert sie den Anschlußkontaktbereich jedoch nur mittelbar bzw. indirekt über den elektrischen Leiter.

Die "Einführrichtung" im Sinne der vorliegenden Erfindung ist beispielsweise eine Richtung, in der ein oder mehrere elektrische Leiter in die Anschlußdose insbesondere in einen Einführbereich des zumindest einen Kontaktelements der Anschlußdose eingeführt werden bzw. einführbar sind. Beispielsweise kann die Einführrichtung parallel zu einer Längsachse eines bzw. aller elektrische Leiter sein. Die erste Einführrichtung E1 kann im wesentlichen senkrecht zu der Fläche bzw. Oberfläche der Leiterplatte bzw. zu dem Grundträger sein, d.h. im wesentlichen parallel zur z-Richtung sein. Ferner kann die erste Einführrichtung E1 im wesentlichen der Einführrichtung der elektrischen Leiter durch den Öffnungsbereich des Grundträgers entsprechen, d.h. vorzugsweise ist zwischen der Einführrichtung E1 und der Einführrichtung der elektrischen Leiter ein Winkel <45 Grad, insbesondere <30 Grad eingeschlossen. Die zweite Einführrichtung E2 ist von der ersten Einführrichtung E1 verschieden, d.h. zwischen der ersten und zweiten. Einführrichtung E1, E2 kann ein Winkel mit einem Betrag von vorzugsweise ≥1 Grad, weiter vorzugsweise ≥2 Grad, ≥5 Grad, ≥10 Grad, ≥15 Grad, ≥30 Grad, ≥45 Grad, und besonders bevorzugt ≥90 Grad eingeschlossen sein. Insbesondere kann die zweite Einführrichtung E2 entgegen der z-Richtung gerichtet ist, also im wesentlichen antiparallel zur ersten Einführrichtung E1 sein. In anderen Worten können die erste Einführrichtung und die zweite Einführrichtung einen Winkel zwischen etwa 170° und etwa 190°, insbesondere etwa 180° einschließen.

Das Kontaktelement ist vorzugsweise über einen Befestigungsbereich mechanisch und/oder elektrisch mit dem Grundträger der Anschlußdose und/oder dem elektrischen Ausgang der Anschlußdose verbunden. Insbesondere ist das Kontaktelement über den Befestigungsbereich mechanisch und/oder elektrisch, insbesondere mittels einer Diode, mit einem weiteren Kontaktelement verbindbar.

Der Begriff "Kontakt" im Sinne der vorliegenden Erfindung beinhaltet insbesondere elektrischen und/oder mechanischen Kontakt.

### Bevorzugte Ausführungsformen der Anschlußdose

Vorzugsweise ist die Anschlußdose gemäß der dritten Kontaktkonfiguration derart konfiguriert, daß der zumindest eine elektrische Leiter entlang einer dritten Einführrichtung E3 in zumindest einen Klemmbereich des Kontaktelementes einführbar ist, wobei die dritte Einführrichtung E3 von der ersten Einführrichtung E1 und/oder der zweiten Einführrichtung E2 verschieden ist.

Insbesondere kann der Klemmbereich auch als Kontaktvorrichtung zum elektrischen und/oder mechanischen Kontaktieren des elektrischen Leiters mit dem Kontaktelement ausgelegt sein. Weiter vorzugsweise ist der Klemmbereich derart ausgelegt, um den elektrischen Leiter zumindest bereichsweise plastisch und/oder elastisch zu verformen, um so zumindest bereichsweise in Reib- und/oder Formschluß mit dem elektrischen Leiter zu gelangen bzw. zu sein. Alternativ oder zusätzlich kann auch der Klemmbereich selbst derart zumindest bereichsweise plastisch und/oder elastisch verformbar sein, um zumindest bereichsweise in Reib- und/oder Formschluß mit dem elektrischen Leiter zu gelangen bzw. zu sein.

Vorzugsweise ist die dritte Einführrichtung E3 im wesentlichen senkrecht zu der ersten Einführrichtung E1 und/oder zweiten Einführrichtung E2 orientiert.

In anderen Worten ist es vorteilhafterweise möglich, den elektrischen Leiter im wesentlichen parallel zu der ersten oder der zweiten Einführrichtung E1, E2 in die Anschlußdose einzuführen, dann den elektrischen Leiter um einen von Null verschiedenen Winkel α zu biegen und in einfacher Weise durch Einführen in den Klemmbereich des Kontaktelements mechanisch an dem Kontaktelement zu befestigen und/oder elektrisch mit dem Kontaktelement zu verbinden. Bevorzugt liegt der Betrag des Winkels α in einem Bereich von etwa 45 bis etwa 135 Grad, besonders bevorzugt in einem Bereich von etwa 70 bis etwa 110 Grad, insbesondere etwa 90 Grad. Ist die dritte Einführrichtung E3 vorzugsweise im wesentlichen senkrecht zur ersten Einführrichtung E1, ist es vorteilhafterweise nicht notwendig, daß eine weitere Zugentlastung bereitgestellt wird, die verhindert, daß der elektrische Leiter entgegen der ersten Einführrichtung E1 aus der Anschlußdose herausgezogen und/oder anderweitig verlagert wird.

Das Kontaktelement ist ausgelegt, mit einem flächigen Leiter bzw. einem flachen Leiter bzw. einem Leiterband der Leiterplatte in Kontakt bringbar zu sein. Dabei weist der elektrische Leiter insbesondere ein Verhältnis von Breite zu Dicke von >2, besonders bevorzugt von >5, >10, >20, >50 und insbesondere von >100 auf. Weiter bevorzugt kann der flache elektrische Leiter ein Folienleiter sein, d.h. ein Verbund aus einer Polymerfolie mit einem daran befestigten elektrischen Leiter, wobei die Befestigung insbesondere mittels Aufdampfen oder Aufkleben an der Polymerfolie erfolgt ist. Besonders bevorzugt ist das Kontaktelement in dem Kontaktbereich mit dem flachen elektrischen Leiter im wesentlichen eben ausgebildet. Vorteilhafterweise wird dadurch der Übergangswiderstand zwischen dem elektrischen Leiter der Leiterplatte und dem Kontaktelement verringert.

Vorzugsweise ist das Kontaktelement derart konfiguriert, daß der zumindest eine elektrische Leiter entlang der ersten Einführrichtung E1 durch den zumindest einen Öffnungsbereich in die Anschlußdose einführbar ist.

Vorzugsweise ist jedes Kontaktelement ausgelegt, um genau einen elektrischen Leiter in dem Einführbereich aufzunehmen.

In anderen Worten weist das Kontaktelement zumindest drei Kontaktkonfigurationen auf, d.h. das Kontaktelement ist konfiguriert, den elektrischen Leiter zumindest mittels drei verschieden Kontaktkonfigurationen zu kontaktieren. Der Einführbereich ist jedoch ausgelegt, nur einen einzigen Leiter auszulegen. Dies gilt vorzugsweise auch, wenn das Kontaktelement die erste und die zweite Konfiguration aufweist. In diesem Fall kann der elektrische Leiter entweder entlang der ersten oder entlang der zweiten Einführrichtung in die den Einführbereich eingeführt werden. Es ist vorzugsweise nicht möglich, daß ein erster Leiter entlang der ersten Einführrichtung E1 eingeführt wird und ein zweiter Leiter entlang der zweiten Einführrichtung E2.

Vorzugsweise ist die Anschlußdose derart ausgelegt, daß mehrere elektrische Leiter durch einen gemeinsamen Öffnungsbereich in die Anschlußdose einführbar sind und die elektrischen Leiter jeweils mit einem Kontaktelement in Kontakt bringbar sind.

Vorzugsweise ist der Einführbereich über dem zumindest einen Öffnungsbereich angeordnet. Besonders bevorzugt ist ein jeder Einführbereich über einem Öffnungsbereich angeordnet. Der Einführbereich ist vorzugsweise ausgebildet, um zumindest einen Leiter aufzunehmen. Insbesondere wird jeder elektrische Leiter durch einen ihm zugeordneten Öffnungsbereich in die Anschlußdose eingeführt und besonders vorzugsweise wird jeder elektrische Leiter nach dem Einführen in die Anschlußdose in einen zugeordneten Einführbereich eines Kontaktelementes eingeführt und mit diesem Kontaktelement kontaktiert. Besonders bevorzugt wird jeweils genau ein elektrischer Leiter in einen Einführbereich eingeführt, d.h. jedem Einführbereich ist genau ein elektrischer Leiter zugeordnet und umgekehrt.

Mit anderen Worten, kann die Anschlußdose insbesondere ausgelegt sein, eine Vielzahl von elektrischen Leitern aufzunehmen, wobei die Anschlußdose eine Anzahl von Kontaktelementen aufweist, die gleich der Anzahl der elektrischen Leiter ist.

Vorzugsweise ist, insbesondere gemäß der dritten Kontaktkonfiguration, der zumindest eine elektrische Leiter mit zumindest einer Kontaktvorrichtung des Kontaktelements verlötbar.

Insbesondere ist der elektrische Leiter durch das Einführen in dem Klemmbereich fixierbar und an bzw. mit der Kontaktvorrichtung verlötet bzw. verlötbar ohne daß der elektrische Leiter in dem Einführbereich zwischen Anschlußkontaktfeder und Anschlußkontaktbereich angeordnet wird bzw. werden muß. Weiter vorzugsweise kann der elektrische Leiter im Klemmbereich fixiert und an bzw. mit diesem verlötet sein.

Vorzugsweise ist das Kontaktelement derart ausgelegt, daß die Kraft entlang der Kraftrichtung K mittels des zumindest einen elektrischen Leiters an die Anschlußkontaktfeder anlegbar ist. Insbesondere ist der elektrische Leiter derart starr ausgebildet, daß die Anschlußkontaktfeder durch die beim Einführen des elektrischen Leiters angelegte Kraft von der Ruheposition in die Betätigungsposition überführt wird. In anderen Worten kann die Anschlußkontaktfeder ausgelegt sein, daß der elektrische Leiter die Anschlußkontaktfeder in die Betätigungsposition bringt. In diesem Fall ist die Betätigungsposition gleich der Betriebsposition.
Vorzugsweise ist das Kontaktelement (11) derart ausgelegt ist, daß die Kraft entlang der Kraftrichtung K durch ein Hilfsmittel an die Anschlußkontaktfeder (15) anlegbar ist. Insbesondere können die elektrischen Leiter zu flexibel sein, um eine Kraft an der Anschlußkontaktfeder anzulegen, damit diese von der Ruheposition in die Betätigungsposition überführt wird. Insbesondere ist es dann notwendig die Anschlußkontaktfeder mit einem Hilfsmittel in die Betätigungsposition zu überführen, um den elektrischen Leiter in den Einführbereich einzuführen.

Vorteilhafterweise ist es insbesondere nicht notwendig, daß die elektrischen Leiter beim Einführen in den Einführbereich mittelbar und/oder unmittelbar selbst eine Kraft aufbringen müssen bzw. ist lediglich eine sehr geringe Kraft notwendig. Dies ist insofern vorteilhaft, da die elektrischen Leiter üblicherweise in Form von dünnen Leiterbändern ausgeführt sind. Diese dünnen Leiterbänder sind leicht verformbar und/oder knickbar und/oder biegbar und können daher entsprechend nur geringe Kräfte aufbringen bzw. können diese Leiter nur mit geringen Kräften beaufschlagt werden, ohne daß sich die Leiter beispielsweise verformen. Ferner erfordert das Einführen der elektrischen Leitungen im wesentlichen keine manuelle Arbeit bzw. keine manuellen Vorgänge mehr. Daher ist es vorteilhafterweise möglich, daß Bestückungsautomaten diese Arbeit übernehmen können. Durch ein externes Aufbringen einer Kraft, um die Anschlußkontaktfeder in die Betätigungsposition zu bringen, können vorteilhafterweise größere Kräfte aufgebracht werden, als es durch die elektrischen Leiter an sich möglich wäre, um die Rückstellkraft der Anschlußkontaktfeder zu überwinden. Deshalb können vorteilhafterweise Federn insbesondere Anschlußkontaktfedern verwendet werden, die eine erhöhte bzw. eine sehr hohe Rückstellkraft besitzen, wodurch sich besonders vorteilhafterweise eine sicherere Kontaktierung ergibt und die Anschlußbox bzw. Anschlußdose sicher und fest mit den elektrischen Leitern des Solarmoduls verbindbar ist. Vorzugsweise beträgt die Rückstellkraft etwa 6 bis etwa 30 N, besonders bevorzugt etwa 10 bis etwa 20 N.

Vorzugsweise ist die zumindest eine Anschlußkontaktfeder derart rückstellfähig ausgebildet ist, daß in einer Betriebsposition der elektrische Leiter und die Anschlußkontaktfeder in Kontakt sind.

Vorzugsweise ist die zumindest eine Anschlußkontaktfeder derart rückstellfähig ausgebildet ist, daß in der Betriebsposition der Leiter in dem Einführbereich des Kontaktelementes fixiert ist. Insbesondere ist ein zwischen der Anschlußkontaktfeder und dem Anschlußkontaktbereich angeordneter elektrischer Leiter fixiert und mit dem Kontaktelement elektrisch leitend verbunden, wenn die an der Anschlußkontaktfeder anlegbare Kraft in Kraftrichtung K fehlt. Der elektrische Leiter kann insbesondere mittels der Anschlußkontaktfeder mit dem Anschlußkontaktbereich des Kontaktelements in elektrischen und/oder mechanischen Kontakt gebracht werden.

Da der elektrischen Leiter entweder durch die Anschlußkontaktfeder und/oder durch den Klemmbereich und/oder durch das Verlöten an der Kontaktvorrichtung an dem Kontaktelement fixiert ist, können vorteilhafterweise zwei oder mehrere elektrische Leiter in der Anschlußdose angeordnet sein. Insbesondere können auch zwei Kontaktelemente oder mehrere, beispielsweise vier, sechs, acht, zehn, zwölf usw. Kontaktelemente in der Anschlußdose angeordnet sein. Werden die elektrischen Leiter mit den jeweiligen Kontaktelementen verbunden und damit fixiert, so ist es vorteilhafterweise nicht notwendig, die elektrischen Leiter zusätzlich, beispielsweise durch Ausgießen mit einem Kunstharz, zu fixieren und/oder elektrisch voneinander zu isolieren. Somit ist die Anschlußdose in einfacher und sicherer Weise, insbesondere automatisch oder manuell an bzw. auf der Leiterplatte montierbar.

Vorzugsweise ist das zumindest eine Kontaktelement derart relativ zu dem zumindest einen Öffnungsbereich angeordnet, daß die Kraftrichtung K und die Einführrichtung E1 entgegengesetzt sind.

Dabei ist die Kraftrichtung K die Richtungskomponente der Kraft, welche zur einer Verlagerung und/oder Verformung, insbesondere entlang der Verlagerungsrichtung V, der Anschlußkontaktfeder führt, so daß ein elektrischer Leiter zwischen der Anschlußkontaktfeder und dem Anschlußkontaktbereich einführbar ist. So kann die Kraftrichtung K eine zumindest bereichsweise Verlagerung und/oder Verformung der Anschlußkontaktfeder entlang der Verlagerungsrichtung V bewirken, wobei die Verlagerungsrichtung insbesondere im wesentlichen senkrecht zur Kraftrichtung K stehen kann. Der Winkel zwischen der Kraftrichtung K und der Verlagerungsrichtung V ist im wesentlichen abhängig von dem Punkt bzw. der Fläche, an welcher die Kraft angelegt wird. Beispielsweise kann die Kraftrichtung K gleich der Verlagerungsrichtung V sein, falls die Kraftrichtung K senkrecht zu einer Oberfläche der Anschlußkontaktfeder ist, an der die Kraft angelegt wird. Alternativ kann eine L-förmig ausgebildete Anschlußkontaktfeder an einem Schenkel mit einer Kraft entlang einer Kraftrichtung K so beaufschlagt werden, daß durch die Verbiegung des anderen Schenkels eine zumindest bereichsweise Verlagerung bzw. Verformung der Anschlußkontaktfeder in eine Verlagerungsrichtung erfolgt, die im wesentlichen senkrecht zur Kraftrichtung K steht.

Vorzugsweise ist die Anschlußkontaktfeder eine Blattfeder. Durch die bevorzugte Ausbildung des Körpers der Anschlußkontaktfeder im wesentlichen als Blattfeder läßt sich die Anschlußkontaktfeder vorteilhafterweise besonders einfach und kostengünstig herstellen.

Vorzugsweise ist das Kontaktelement einstückig ausgebildet. Das Kontaktelement kann beispielsweise aus einem Metall oder einer Metallegierung ausgebildet sein.

### Verwendung gemäß einem Aspekt

Ein weiterer Aspekt der Erfindung betrifft die Verwendung einer erfindungsgemäßen Anschlußdose zum Anordnen an einer Leiterplatte, insbesondere an einem Solarmodul, gemäß Anspruch 12 wobei die Anschlußdose an einer Fläche der Leiterplatte angeordnet wird und das zumindest eine Kontaktelement mit zumindest einem elektrischen Leiter des Solarmoduls elektrisch verbunden wird. Insbesondere kann die Anschlußdose an der Leiterplatte angeordnet werden und danach das zumindest eine Kontaktelement mit zumindest einem elektrischen Leiter des Solarmoduls elektrisch verbunden werden. Die Anschlußdose kann beispielsweise an der Leiterplatte festgeklebt werden.

### Solarpaneel gemäß einem Aspekt

Ein weiterer Aspekt der Erfindung betrifft ein Solarpaneel umfassend:
- zumindest ein im wesentlichen plattenförmiges Solarmodul und
- zumindest eine erfindungsgemäße Anschlußdose, wobei das Solarmodul zumindest einen elektrischen Leiter umfaßt und der zumindest eine elektrische Leiter durch einen Öffnungsbereich der Anschlußdose hindurch ragt und mit einem Kontaktelement der Anschlußdose verbunden ist.

In anderen Worten kann das Solarpaneel umfassen: ein Solarmodul mit einem im wesentlichen plattenförmigen Körper mit zumindest einer spannungserzeugenden Solarzelle, zumindest zwei mit der zumindest einen Solarzelle verbundenen Leiterbänder, die an einer Oberfläche des Solarmoduls aus diesem herausgeführt sind und im wesentlichen senkrecht zu diesem stehen und zumindest eine erfindungsgemäße Anschlußdose.

### Kontaktelement gemäß einem Aspekt

Ein weiterer Aspekt der Erfindung betrifft ein Kontaktelement zum Anordnen in einer Anschlußdose; insbesondere zur Verwendung in einer Anschlußdose, gemäß Anspruch 14.

Der zumindest eine elektrische Leiter kann beispielsweise im wesentlichen parallel zu der ersten Einführrichtung E1 durch einen Öffnungsbereich in das Innere der Anschlußdose eingeführt werden bzw. sein.

### Verfahren gemäß einem Aspekt

Ein weiterer Aspekt der Erfindung betrifft ein Verfahren zum Anordnen einer Anschlußdose gemäß Anspruch 15.

Die vorliegende Erfindung ist nicht auf die obigen, beispielhaft beschriebenen Ausführungsformen beschränkt. Vielmehr können einzelne Elemente und/oder Merkmale eines jeden beschriebenen Aspekts und/oder einer jeden beschriebenen Ausführungsform mit einzelnen Elementen und/oder Merkmalen der weiteren Aspekte und/oder weiteren Ausführungsformen in beliebiger Weise miteinander kombiniert werden und somit weitere Aspekte und/oder Ausführungsformen gebildet werden.

### Figurenbeschreibung

Nachfolgend werden bevorzugte Ausführungsformen der vorliegenden Erfindung anhand der beigefügten Zeichnungen beispielhaft erläutert. Es zeigt:
- Figur 1:: eine perspektivische Ansicht einer Ausführungsform einer Anschlußdose;
- Figur 2:: eine perspektivische Explosionsansicht eines Kontaktelementes der Anschlußdose mit einer Anschlußkontaktfeder;
- Figur 3:: eine perspektivische Ansicht des Kontaktelementes der Anschlußdose in montiertem Zustand mit einem in einer ersten Einführrichtung eingeführten elektrischen Leiter;
- Figur 4:: eine Querschnitt durch das Kontaktelement gemäß Fig. 3;
- Figur 5:: eine perspektivische Ansicht des Kontaktelementes der Anschlußdose mit einem in einer zweiten Einführrichtung eingeführten elektrischen Leiter;
- Figur 6:: einen Querschnitt durch das Kontaktelement gemäß Fig. 5;
- Figur 7:: eine perspektivische Ansicht des Kontaktelementes der Anschlußdose mit einem in einer dritten Einführrichtung eingeführten elektrischen Leiter;
- Figur 8:: einen Querschnitt durch das Kontaktelement gemäß Fig. 7.

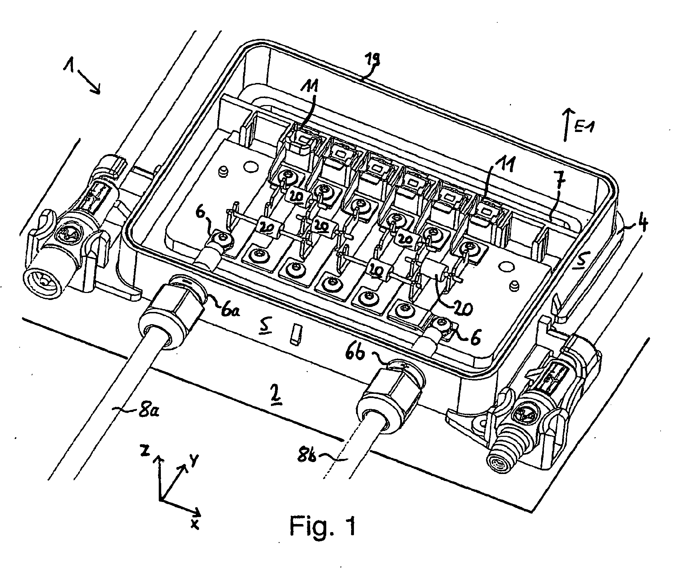

Figur 1 zeigt eine perspektivische Ansicht einer Ausführungsform einer Anschlußdose 1 für Leiterplatte(n) 2, insbesondere Solarrmodul(e) 2, wobei die elektrischen Leitungen 9 der Leiterplatte(n) 2 in Form von Leiterbändern herausgeführt werden.

Eine Anschlußdose 1 ist an bzw. auf der Anschlußseite des Solarmoduls 2 bzw. der Leiterplatte 2 an bzw. auf diesem bzw. dieser angeordnet. Die Anschlußdose 1 weist ein Gehäuse auf, welches einen Grundträger 4, eine Wandung 5, zwei elektrische Ausgänge 6, eine Öffnungsbereich 7 und einen Deckel (nicht gezeigt) umfaßt. Der Grundträger 4 ist an der dem Solarmodul 2 bzw. der Leiterplatte 2 zugewandten Seite der Anschlußdose 1, d.h. unten, angeordnet. Die dem Solarmodul 2 abgewandte Seite der Anschlußdose 1 wird dementsprechend als "oben" bezeichnet. An dieser Seite wird der Deckel (nicht gezeigt) angeordnet, um die Anschlußdose 1 zu verschließen. Der Grundträger 4 dient vorzugsweise der Befestigung der Anschlußdose 1 an der Anschlußseite des Solarmoduls 2. Der Grundträger 4 weist einen Öffnungsbereich 7 zur Durchführung der elektrischen Leitungen 9 des Solarmoduls 2 auf. Vorzugsweise sind in dieser Ausführungsform alle elektrischen Leitungen 9 durch einen einzigen Öffnungsbereich 7 durch den Grundträger entlang einer Einführrichtung E1, d.h. von unten nach oben, durchführbar.

Die Wandung 5 des Grundträgers 4 erstreckt sich im wesentlichen senkrecht zu dem Grundträger 4. Vorzugsweise sind in einem Bereich der Wandung 5 zwei Außenanschlußbereiche 6a, 6b angeordnet, die in dieser Ausführungsform jeweils als verschraubbare Kabeldurchführungen ausgebildet sind. Die Außenanschlußbereiche 6a, 6b sind ausgelegt, um die durchgeführten Kabel 8a, 8b mechanisch zu fixieren und das Innere der Anschlußdose 1 insbesondere vor dem Eindringen von Schmutz und Feuchtigkeit zu schützen. Die Kabel 8a, 8b sind an jeweils einem Ende mit einem elektrischen Ausgang 6 der Anschlußdose 1 elektrisch kontaktiert, um den jeweiligen elektrischen Ausgang 6 mit einer externen Vorrichtung (nicht gezeigt) elektrisch zu verbinden. In anderen Worten umfaßt die Wandung 5 zwei Öffnungen, die ermöglichen, daß die Kabel 8a, 8b im Inneren der Anschlußdose 1 jeweils mittelbar mit zumindest einem Kontaktelement 11 in elektrischem Kontakt sind, und zwar wie in Figur 1 gezeigt beispielsweise anhand der Ausgänge 6. Die Ausgänge 6 dienen insbesondere dazu, elektrische Leistung die von dem Solarmodul 2 bei Beleuchtung erzeugt wird, auszugeben. Zu diesem Zweck können die Kabel 8a, 8b angeordnet sein. Die Ausgänge 6 können auch direkt mit der Umgebung der Anschlußdose 1 in Kontakt sein, d.h. die Ausgänge 6 können ausgelegt sein, elektrische Leistung vom Inneren der Anschlußdose nach außen zu führen.

Ferner weist die Wandung 5 vorzugsweise an ihrem oberen Rand zumindest bereichsweise eine Nut 19 auf, in der vorzugsweise eine Dichtung angeordnet werden kann, so daß die Anschlußdose 1 durch den Deckel, insbesondere fluiddicht, besonders bevorzugt wasserdicht, verschlossen werden kann. Ebenso können die Öffnungen in den Außenanschlußbereichen 6a, 6b fluiddicht verschlossen sein.

In dieser Ausführungsform sind sechs Kontaktelemente 11, an dem Grundträger 4 angebracht, welche dazu ausgelegt sind im montierten Zustand der Anschlußdose 1, d.h. im wesentlichen in Betriebsposition der Anschlußkontaktfedern 15, die elektrischen Leiter 9 des Solarmoduls 2, insbesondere in Form von Leiterbändern, zu kontaktieren. Die Kontaktelemente 11 sind untereinander mit Sperrdioden 20 verbunden, so daß im Falle eines Spannungsabfalls zwischen zwei Kontaktelementen 11, welcher einen vorbestimmten bzw. vorbestimmbaren Grenzwert überschreitet, ein Kurzschluß hergestellt wird.

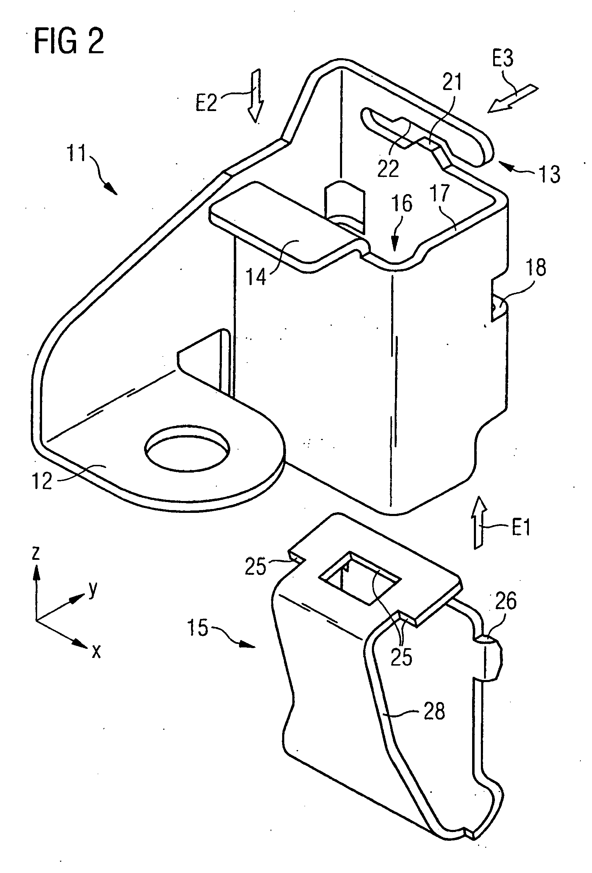

Figur 2 zeigt eine perspektivische Ansicht des Kontaktelementes 11 der Anschlußdose 1 und der Anschlußkontaktfeder 15. Das Kontaktelement 11 ist vorzugsweise einstückig aus Metall hergestellt und umfaßt einen Befestigungsbereich 12, einen Klemmbereich 13, eine Kontaktvorrichtung 14, eine Anschlußkontaktfederaufnahme 17 und zumindest einen Anschlußkontaktfederbefestigungsbereich 18. Diese Bereiche sind miteinander elektrisch durch den metallischen Körper des Kontaktelementes 11 verbunden. Das Kontaktelement 11 kann über den Befestigungsbereich 12 mechanisch und/oder elektrisch mit dem Grundträger 4 und/oder dem elektrischen Ausgang 6 verbunden sein. Das Kontaktelement kann auch mehrere Bestandteile umfassen, die miteinander das Kontaktelement 11 bilden. Die Bestandteile können miteinander verklebt und/oder verpreßt und/oder verkrimpt und/oder verschweißt und/oder verlötet usw. sein. Es ist auch möglich, daß einzelne Bestandteile in ein oder mehrere andere Bestandteile gesteckt werden.

Der Klemmbereich 13 ist als längliche Ausnehmung in dem Kontaktelement 11 ausgebildet und dazu ausgelegt, den elektrischen Leiter 9 aufzunehmen und zu fixieren. Vorzugsweise kann der Klemmbereich 13 dazu ausgelegt sein, einen elektrischen Leiter elastisch und/oder plastisch zu verformen, um ihn im Klemmbereich 13 zu fixieren. Insbesondere weist die gezeigte Ausführungsform einen Vorsprung 21 und einen korrespondierenden Rücksprung 22 auf, die einen flachen, bandförmigen elektrischen Leiter 9 elastisch längs einer Biegeachse entlang der Einführrichtung E3 biegen, so daß der elektrische Leiter 9 aufgrund seiner elastischen Rückstellkraft im Klemmbereich 13 fixiert ist. In anderen Worten kann mittels des Vorsprungs 21 und des Rücksprungs 22 die Oberfläche des Leiters 9 derart verändert werden, daß der Leiter 9 einen Graben bzw. eine Nut aufweist.

Die Kontaktvorrichtung 14 ist als ebener Bereich ausgebildet, wobei eine Längserstreckung der Kontaktvorrichtung 14 sich entlang der Einführrichtung E3 erstreckt, so daß ein elektrischer Leiter 9, der entlang der Einführrichtung E3 durch den Klemmbereich 13 geführt ist, die Kontaktvorrichtung 14 kontaktieren kann und insbesondere mit dieser verlötet werden kann.

Die Anschlußkontaktfederaufnahme 17 des Kontaktelementes ist dazu ausgelegt die Anschlußkontaktfeder 15 zumindest bereichsweise aufzunehmen. Insbesondere kann die Anschlußkontaktfeder 15 entlang einer Einführrichtung E1 in das Kontaktelement 11 eingeführt werden.

Die Anschlußkontaktfederaufnahme 17 ist in dieser Ausführungsform im wesentlichen als Hohlprofil, insbesondere mit im wesentlichen rechteckigem Querschnitt beispielsweise bei horizontaler Schnittebene und/oder im wesentlichen rechteckigem Querschnitt beispielsweise bei im wesentlichen vertikaler Schnittebene ausgebildet. Vorzugsweise ist ein zumindest bereichsweise im wesentlichen ebener Anschlußkontaktbereich 24 derart angeordnet, daß er sich entlang der Einführrichtung E1 erstreckt. Der Anschlußkontaktbereich befindet sich in dem Einführbereich 16. Ein elektrischer Leiter kann insbesondere entlang der ersten Einführrichtung E1, d.h. von unten, oder entlang der zweiten Einführrichtung E2, d.h. von oben, durch eine untere bzw. obere Öffnung des Kontaktelementes 11 bzw. des Einführbereichs 16 in das Kontaktelement 11, insbesondere in den Einführbereich 16 eingeführt werden.

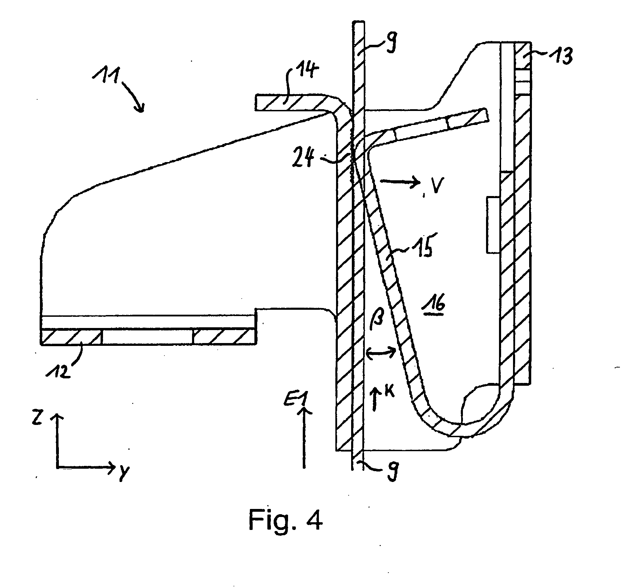

Der im wesentliche ebene Anschlußkontaktbereich 24 ist derart ausgebildet, daß er einen sich entlang der Einführrichtung E1 erstreckenden elektrischen Leiter 9 (gezeigt in Figur 4), der in dem Einführbereich 16 angeordnet ist, kontaktiert.

Die Anschlußkontaktfeder 15 umfaßt zwei Befestigungsbereiche 26, die in dieser Ausführungsform vorzugsweise als Vorsprünge ausgebildet sind, und einen Blattfederbereich 28. Die zwei Befestigungsbereiche 26 sind insbesondere derart ausgelegt, um zumindest bereichsweise mit den entsprechenden Anschlußkontaktfederbefestigungsbereichen 18 des Kontaktelementes 11 in Eingriff zu gelangen, um die Anschlußkontaktfeder 15 in dem Kontaktelement 11 zu befestigen bzw. festzulegen. Der im wesentlichen den Körper der Anschlußkontaktfeder 15 bildende Blattfederbereich 28 ist vorzugsweise im wesentlichen als ebene Blattfeder ausgebildet.

Insbesondere sind der Anschlußkontaktbereich 24 und die Anschlußkontaktfederbefestigungsbereiche 18 des Kontaktelementes 11 und die Anschlußkontaktfeder 15 derart ausgebildet, daß in der Ruheposition aufgrund der Federkraft der Anschlußkontaktfeder 15 der Anschlußkontaktbereich 24 und die Anschlußkontaktfeder 15 mechanisch und elektrisch verbunden sind, d.h. die Anschlußkontaktfeder 15 drückt in der Ruheposition gegen den Anschlußkontaktbereich 24 des Kontaktelements 11. Insbesondere ist die Anschlußkontaktfeder 15 durch Eingreifen der zwei Befestigungsbereiche 26 in die Anschlußkontaktfederbefestigungsbereiche 18 des Kontaktelements 11 fixiert.

Die Anschlußkontaktfeder 15 kann auslegt sein aufgrund des Einführens des elektrischen Leiters und/oder durch Einwirken eines Hilfsmittels betätigt zu werden. Dazu kann das Hilfsmittel entlang einer Einführrichtung E1, E2 in den Einführbereich 16 eingeführt werden und die Anschlußkontaktfeder 15 betätigen, insbesondere elastisch und/oder plastisch verformen.

Die Anschlußkontaktfeder 15 kann ferner einen oder mehrere Aktuatorbereiche 25 aufweisen, welche insbesondere auch außerhalb des Einführbereichs 16 angeordnet sein können, um eine Kraft entlang einer Kraftrichtung K anzulegen, so daß die Anschlußkontaktfeder von der Ruheposition in die Betätigungsposition überführt werden kann.

Das Hilfsmittel (nicht gezeigt) zum Betätigen der Anschlußkontaktfeder 15 umfaßt vorzugsweise für jede zu betätigende Anschlußkontaktfeder 15 einen, insbesondere ein Paar, Betätigungsfinger, der bzw. die vorzugsweise entlang der Einführrichtung E1, E2 konisch bzw. keilförmig zulaufend ausgebildet sind. Die Betätigungsfinger eines Paares sind vorzugsweise beabstandet voneinander angeordnet, so daß der elektrische Leiter 9 zwischen die Betätigungsfinger des Paares einführbar ist. Durch das Einführen des Hilfsmittels wird die Anschlußkontaktfeder 15 von der Ruheposition in die Betätigungsposition überführt, so daß ein elektrischer Leiter in dem Zwischenraum, der durch die Anschlußkontaktfeder 15, den Anschlußkontaktbereich 24 und dem Hilfsmittel gebildet wird, eingeführt werden kann.

In anderen Worten wird durch das Einführen des Hilfsmittels entlang der Einführrichtung E1, E2 eine Kraft in Kraftrichtung K an die Anschlußkontaktfeder 15 angelegt. In der Betätigungsposition ist die Anschlußkontaktfeder 15 zumindest bereichsweise von dem Anschlußkontaktbereich 24 beabstandet. Die in Betätigungsposition befindliche Anschlußkontaktfeder 15, der Anschlußkontaktbereich 24 und der bzw. die Betätigungsfinger umgeben einen Einführbereich 16, so daß der durch den Öffnungsbereich 7 durchgeführte elektrische Leiter 9 im wesentlichen ohne Aufbringen einer Einführkraft in den Einführbereich 16 anordenbar ist.

Nach Entfernen des Hilfsmittels verlagert sich die Anschlußkontaktfeder 15 zurück in Richtung seiner Ruheposition bis zum Erreichen der Betriebsposition. Der elektrische Leiter 9 ist dann zwischen der Anschlußkontaktfeder 15 und dem Anschlußkontaktbereich 24 angeordnet und durch die Rückstellkraft der Anschlußkontaktfeder 15 gehalten, insbesondere festgeklemmt.

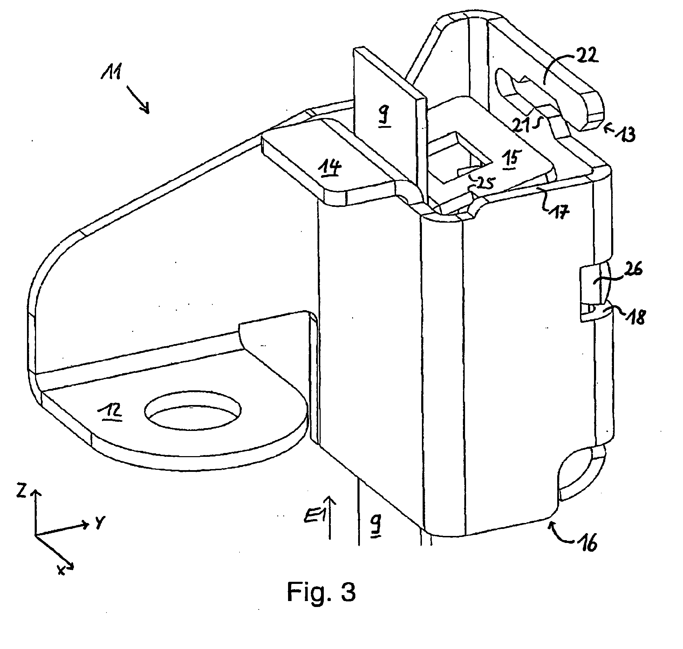

Figur 3 zeigt eine perspektivische Ansicht und Figur 4 einen Querschnitt des Kontaktelementes 11 der Anschlußdose 1 in zusammengesetztem Zustand mit einem in der ersten Einführungsrichtung E1 eingeführten elektrischen Leiter 9. Figuren 3 und 4 repräsentieren somit beispielhaft die erste Kontaktkonfiguration.

Vorzugsweise ist der Anschlußkontaktbereich 24 derart angeordnet und ausgebildet, daß er sich zumindest bereichsweise eben entlang der Einführrichtung E1 erstreckt, so daß der Anschlußkontaktbereich 24 das sich entlang der Einführrichtung E1 erstreckende Leiterband 9 kontaktiert. Das Leiterband 9 ist hierbei durch eine untere Öffnung des Kontaktelements 11 in das Kontaktelement 11 eingeführt.

Vorzugsweise ist der Blattfederbereich 28 der Anschlußkontaktfeder 15 derart angeordnet, daß die Längserstreckung des Blattfederbereiches 28 mit der Längserstreckung des Anschlußkontaktbereichs 24, d.h. der Einführrichtung E1 einen spitzen Winkel β einschließen. Der spitze Winkel β beträgt vorzugsweise zwischen 5 und 80 Grad, weiter bevorzugt zwischen 5 und 45 Grad und besonders bevorzugt zwischen 5 und 20 Grad.

Weiter vorzugsweise ist die Anschlußkontaktfeder 15 derart ausgebildet, daß der elektrische Leiter 9 beim Einführen entlang der Einführrichtung E1 eine ausreichende Kraft in Kraftrichtung K aufbringt, um die Anschlußkontaktfeder 15 aus der Ruheposition in die Betätigungsposition zu überführen, wobei die Anschlußkontaktfeder 15 bereichsweise entlang der Verlagerungsrichtung V verlagert wird.

Insbesondere sind der Anschlußkontaktbereich 24 und die Anschlußkontaktfeder 15 derart ausgebildet, daß der dazwischen angeordnete bzw. eingeführte elektrische Leiter 9 in der Betätigungsposition, jedoch ohne angelegte Kraft, aufgrund der Federkraft der Anschlußkontaktfeder 15 mit dem Anschlußkontaktbereich 24 und/oder der Anschlußkontaktfeder 15 elektrisch verbunden ist. Weiter ist vorzugsweise aufgrund der Federkraft der elektrische Leiter 9 zwischen der Anschlußkontaktfeder 9 und der Anschlußkontaktbereich 24 fixiert, insbesondere eingeklemmt. Die Fixierung kann lösbar sein. Das heißt, durch Anlegen einer Kraft in Kraftrichtung K kann die Anschlußkontaktfeder 15 soweit verlagert werden, daß der elektrische Leiter 9 wieder aus dem Einführbereich 16 entfernt werden kann. Das Kontaktelement 11 ist somit wiederverwendbar. Alternativ oder zusätzlich kann die Anschlußkontaktfeder 15 auch so ausgelegt sein, daß der elektrische Leiter 9 durch Anlegen einer entsprechend großen Kraft entgegen der Einführrichtung E1 entfernbar ist und damit die Verbindung zwischen dem elektrischen Leiter 9 und dem Kontaktelement 11 lösbar ist.

Ferner kann der Endbereich des elektrischen Leiters 9 im wesentlichen rechtwinklig umgebogen sein, um ihn mit der Kontaktvorrichtung 14 in Kontakt zu bringen, insbesondere um den elektrischen Leiter 9 an der Kontaktvorrichtung 14 zu verlöten. Der elektrische Leiter 9 kann somit mittels der ersten Kontaktkonfiguration in dem Kontaktelement 11 fixiert sein und gleichzeitig mittels der dritten Kontaktkonfiguration an dem Kontaktelement 11 fixiert sein.

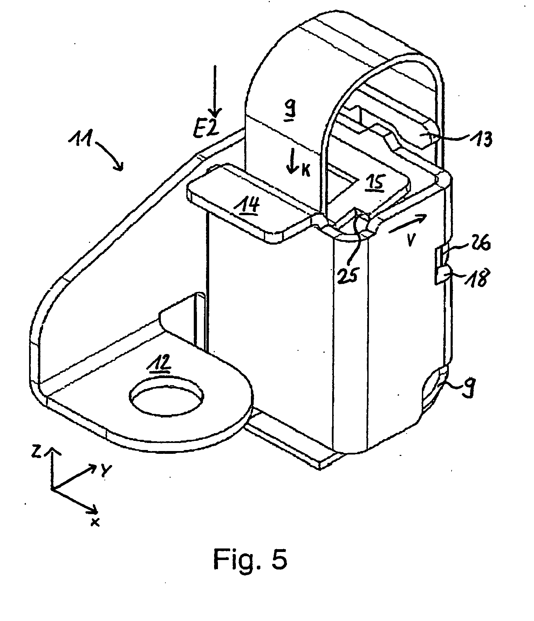

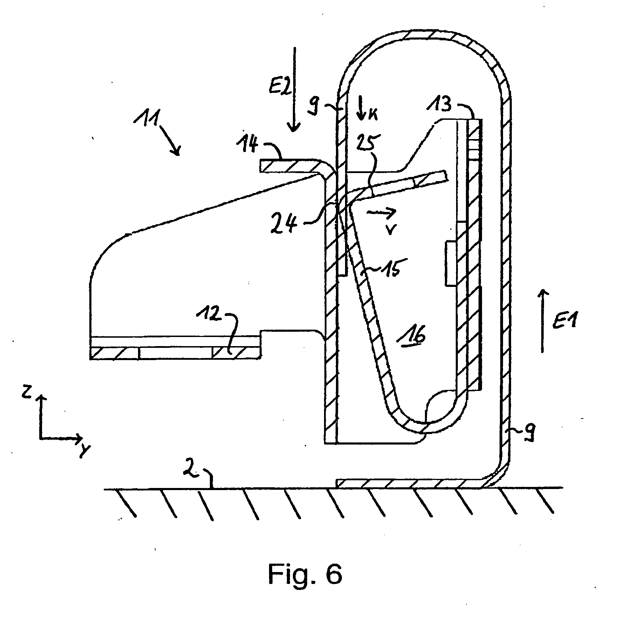

Figur 5 zeigt eine perspektivische Ansicht und Figur 6 einen Querschnitt des Kontaktelementes 11 der Anschlußdose 1 in zusammengesetztem Zustand mit einem in der zweiten Einführungsrichtung E2 eingeführten elektrischen Leiter 9. Figuren 5 und 6 repräsentieren somit beispielhaft die zweite Kontaktkonfiguration.

Vorzugsweise ist der Anschlußkontaktbereich 24 derart angeordnet und ausgebildet, daß er sich zumindest bereichsweise eben entlang der Einführrichtung E2 erstreckt, so daß der Anschlußkontaktbereich 24 den sich entlang der Einführrichtung E2 erstreckenden elektrischen Leiter 9 kontaktiert. Der elektrische Leiter 9 ist hierbei durch eine obere Öffnung des Kontaktelements 11 von oben in das Innere des Kontaktelements 11 eingeführt.

Weiter vorzugsweise ist die Anschlußkontaktfeder 15 derart ausgebildet, daß unmittelbar oder mittelbar über ein Hilfsmittel eine ausreichende Kraft auf den Aktuatorbereich 25 der Anschlußkontaktfeder 15 in Kraftrichtung K aufgebracht werden kann, um die Anschlußkontaktfeder 15 entlang der Verlagerungsrichtung V aus der Ruheposition in die Betätigungsposition zu überführen. In der Betätigungsposition ist der Einführbereich 16 zwischen der Anschlußkontaktfeder 15 und dem Anschlußkontaktbereich 24 freigegeben, so daß der elektrischer Leiter 9 dort entlang der zweiten Einführrichtung E2 eingeführt und zwischen der Anschlußkontaktfeder 15 und dem Anschlußkontaktbereich 24 angeordnet werden kann.

Wie in der Beschreibung der Figuren 3 und 4 erläutert, sind der Anschlußkontaktbereich 24 und die Anschlußkontaktfeder 15 insbesondere derart ausgebildet, daß der dazwischen angeordnete bzw. eingeführte elektrische Leiter 9 zwischen dem Anschlußkontaktbereich 24 und der Anschlußkontaktfeder 15 eingeklemmt und elektrisch mit diesen verbunden ist. Die Fixierung des elektrischen Leiters 9 kann ebenfalls lösbar sein. Insbesondere kann die Fixierung derart ausgelegt sein, daß ein bloßes Herausziehen des elektrischen Leiters nicht möglich ist.

Der in den Figuren 5 und 6 dargestellte elektrische Leiter 9 ist um den Klemmbereich 13 herumgeführt und ist entlang der Einführrichtung E2 in den Einführbereich 16 eingeschoben. Alternativ kann der elektrische Leiter 9 auch entlang der Einführrichtung E3 durch den Klemmbereich 13 geführt sein, um dann im wesentlichen im rechten Winkel umgebogen und entlang der Einführrichtung E2 in den Einführbereich eingeführt zu sein. Der elektrische Leiter 9 kann somit mittels der dritten Kontaktkonfiguration an dem Kontaktelement 11 fixiert sein und gleichzeitig mittels der zweiten Kontaktkonfiguration in dem Kontaktelement 11 fixiert sein.

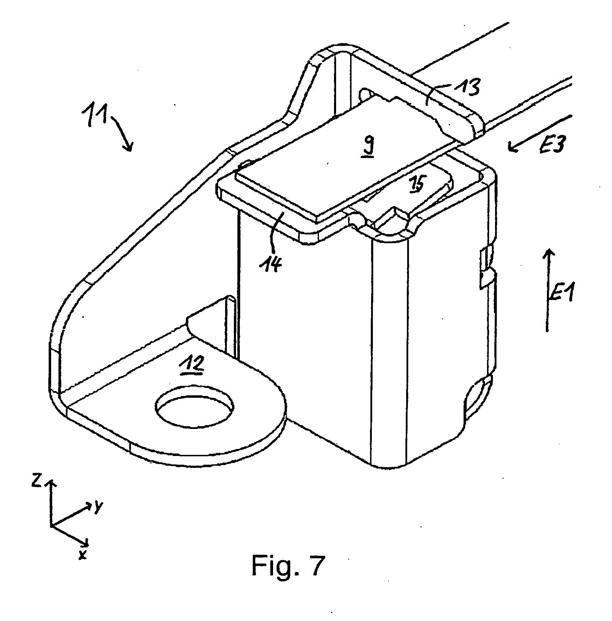

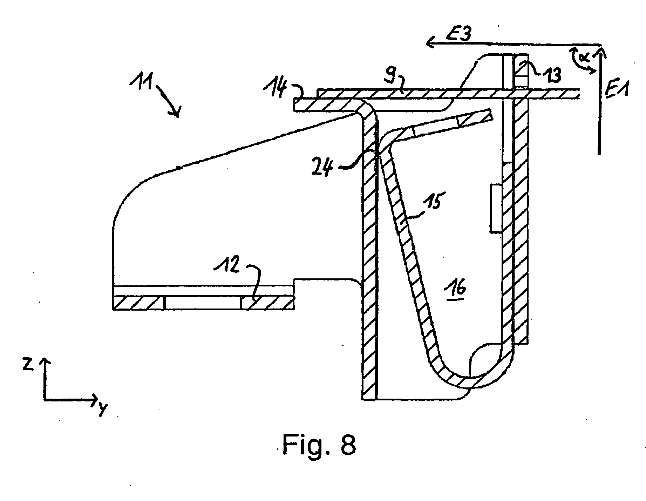

Figur 7 zeigt eine perspektivische Ansicht und Figur 8 einen Querschnitt des Kontaktelementes 11 der Anschlußdose 1 mit einem in der dritten Einführungsrichtung E3 eingeführten elektrischen Leiter 9. Figuren 7 und 8 repräsentieren somit beispielhaft die dritte Kontaktkonfiguration.

Der elektrische Leiter 9 ist entlang der Einführrichtung E3 durch den Klemmbereich 13 geführt, und erstreckt sich weiter entlang der Einführrichtung E3, um die Kontaktvorrichtung 14 zu kontaktieren. Dabei kann der elektrische Leiter 9 die Kontaktvorrichtung 14 unmittelbar oder mittelbar mittels eines Lotes mechanisch und/oder elektrisch kontaktieren. Insbesondere kann der elektrische Leiter 9 mit der Kontaktvorrichtung 14 durch verlöten und/oder kleben so verbunden sein, daß die Verbindung nur durch erneutes Erhitzen der Kontaktvorrichtung 14 bzw. des elektrischen Leiters 9 bzw. des Lotes gelöst werden kann und/oder durch Verwenden, insbesondere auftragen eines Lösungsmittels. Der elektrische Leiter 9 kann mit der Kontaktvorrichtung 14 auch verschweißt sein.

Vorzugsweise wird der elektrische Leiter 9 entlang der Einführrichtung E1 durch den Öffnungsbereich 7 der Anschlußdose in das Innere der Anschlußdose 1 eingeführt und um einen Winkel α in Richtung der Einführrichtung E3 umgebogen, um den elektrischen Leiter 9 entlang der Einführrichtung E3 in den Klemmbereich 13 einzuführen. Bevorzugt beträgt der Winkel α zwischen etwa 45 bis etwa 135 Grad, besonders bevorzugt zwischen etwa 70 bis etwa 110 Grad, insbesondere etwa 90 Grad.

Die vorliegende Beschreibung der bevorzugten Ausführungsformen ist nicht auf die oben beschriebenen jeweiligen Figuren beschränkt. Vielmehr gelten die Ausführungen zu den jeweiligen Figuren sinngemäß auch für die weiteren Figuren. Ebenso gelten die zu den Figuren gemachten Ausführungen auch für die vorangegangenen Aspekte und Ausführungsformen. Somit können mittels der zu den (jeweiligen) Figuren beschrieben Einzelmerkmale und/oder mittels der Einzelmerkmale der Aspekte und/der (Einzelmerkmale) Ausführungsformen weitere bevorzugte Ausführungsformen gebildet werden, wobei die Einzelmerkmale beliebig miteinander kombiniert werden können.

### Bezugszeichenliste

- 1: Anschlußdose
- 2: Leiterplatte/Solarmodul
- 4: Grundträger
- 5: Wandung
- 6: elektrischer Ausgang
- 6a,b: Außenanschlußbereich
- 7: Öffnungsbereich
- 8a,b: Kabel
- 9: elektrischer Leiter/Leiterband
- 11: Kontaktelement
- 12: Befestigungsbereich
- 13: Klemmbereich
- 14: Kontaktvorrichtung
- 15: Anschlußkontaktfeder
- 16: Einführbereich
- 17: Anschlußkontaktfederaufnahme
- 18: Anschlußkontaktfederbefestigungsbereich
- 19: Nut
- 20: Bypass-Diode
- 21: Vorsprung
- 22: Rücksprung
- 24: Anschlußkontaktbereich
- 25: Aktuatorbereich
- 26: Befestigungsbereich der Anschlußkontaktfeder 15
- 28: Blattfederbereich
- E1: erste Einführrichtung
- E2: zweite Einführrichtung
- E3: dritte Einführrichtung
- K: Kraftrichtung
- V: Verlagerungsrichtung

## Patentansprüche

1. Anschlußdose (1) für eine Leiterplatte (2), insbesondere für ein Solarmodul, umfassend:
einen Grundträger (4) mit zumindest einem Öffnungsbereich (7) zum Einführen zumindest eines elektrischen Leiters (9) der Leiterplatte (2),
zumindest ein Kontaktelement (11) zum elektrischen Kontakt mit zumindest einem Leiter (9) der Leiterplatte (2), wobei das Kontaktelement (11) ausgelegt ist, mit einem flächigen Leiter (9) in Kontakt bringbar zu sein und
zumindest einen elektrischen Ausgang (6) zur Ausgabe von elektrischer Leistung der Leiterplatte (2), welcher mit dem zumindest einem Kontaktelement (11) elektrisch verbunden ist,
wobei
- das zumindest eine Kontaktelement (11) zumindest eine in einem Einführbereich (16) angeordnete, rückstellfähige Anschlußkontaktfeder (15) umfaßt,
- die zumindest eine Anschlußkontaktfeder (15) durch Anlegen einer Kraft entlang einer Kraftrichtung (K) an der Anschlußkontaktfeder (15) derart rückstellfähig betätigbar ist, daß der zumindest eine elektrischer Leiter (9) zumindest bereichsweise zwischen zumindest einem Anschlußkontaktbereich (24) und der zumindest einen Anschlußkontaktfeder (15) anordenbar ist,
- **gekennzeichnet dadurch, daß** jedes Kontaktelement (11) konfiguriert ist, daß der zumindest eine flächige, elektrische Leiter (9) mittels zumindest der folgenden drei Kontaktkonfigurationen mit dem Kontaktelement (11) in Kontakt bringbar ist:
-- erste Kontaktkonfiguration: das Kontaktelement (11) ist konfiguriert, daß der zumindest eine elektrische Leiter (9) entlang einer ersten Einführrichtung (E1) in den Einführbereich (16) des Kontaktelements (11) einführbar ist und der zumindest eine elektrische Leiter (9) in dem Einführbereich (16) mittels der Anschlußkontaktfeder (15) mit dem Kontaktelement (11) in Kontakt bringbar ist;
-- zweite Kontaktkonfiguration: das Kontaktelement (11) ist konfiguriert, daß der zumindest eine elektrische Leiter (9) entlang einer zweiten Einführrichtung (E2) in den Einführbereich (16) des Kontaktelements (11) einführbar ist und der zumindest eine elektrische Leiter (9) in dem Einführbereich (16) mittels der Anschlußkontaktfeder (15) mit dem Kontaktelement (11) in Kontakt bringbar ist, wobei die erste und die zweite Richtung (E1, E2) voneinander verschieden sind;
-- dritte Kontaktkonfiguration: das Kontaktelement (11) ist konfiguriert, daß der zumindest eine elektrische Leiter (9) mit einer Kontaktvorrichtung (14) des Kontaktelements (11) in Kontakt bringbar ist, wobei die Kontaktvorrichtung (14) außerhalb des Einführbereichs (16) angeordnet ist.

2. Anschlußdose (1) nach Anspruch 1, wobei die Anschlußdose gemäß der dritten Kontaktkonfiguration derart konfiguriert ist, daß der zumindest eine elektrische Leiter (9) entlang einer dritten Einführrichtung (E3) in zumindest einen Klemmbereich (13) des Kontaktelementes (11) einführbar ist, wobei die dritte Einführrichtung (E3) von der ersten Einführrichtung (E1) und/oder der zweiten Einführrichtung (E2) verschieden ist.

3. Anschlußdose (1) nach Anspruch 2, wobei die dritte Einführrichtung (E3) im wesentlichen senkrecht zu der ersten Einführrichtung (E1) orientiert ist.

4. Anschlußdose nach einem der vorherigen Ansprüche, wobei das Kontaktelement konfiguriert ist, daß der zumindest eine elektrische Leiter (9) entlang der ersten Einführrichtung (E1) durch den zumindest einen Öffnungsbereich (7) in die Anschlußdose (1) einführbar ist.

5. Anschlußdose (1) nach einem der vorherigen Ansprüche, wobei jedes Kontaktelement (11) ausgelegt ist, genau einen elektrischen Leiter (9) in dem Einführbereich (16) aufzunehmen.

6. Anschlußdose (1) nach einem der vorherigen Ansprüche, wobei die Anschlußdose (1) ausgelegt ist, daß mehrere elektrische Leiter (9) durch einen gemeinsamen Öffnungsbereich (7) in die Anschlußdose (1) einführbar sind und die elektrischen Leiter (9) jeweils mit einem Kontaktelement (11) in Kontakt bringbar sind, wobei der Einführbereich (16) bevorzugt über dem zumindest einen Öffnungsbereich (7) angeordnet ist.

7. Anschlußdose (1) nach einem der vorherigen Ansprüche, wobei gemäß der dritten Konfiguration der zumindest eine elektrische Leiter (9) mit zumindest einer Kontaktvorrichtung (14) des Kontaktelements (11) verlötbar ist.

8. Anschlußdose (1) nach einem der vorherigen Ansprüche, wobei das Kontaktelement (11) derart ausgelegt ist, daß die Kraft entlang der Kraftrichtung (K) mittels des zumindest einen elektrischen Leiters oder durch ein Hilfsmittel an die Anschlußkontaktfeder (15) anlegbar ist.

9. Anschlußdose (1) nach einem der vorherigen Ansprüche, wobei die zumindest eine Anschlußkontaktfeder (15) derart rückstellfähig ausgebildet ist,
daß in einer Betriebsposition der elektrische Leiter (9) und die Anschlußkontaktfeder (15) in Kontakt sind und /oder
daß in der Betriebsposition der Leiter (9) in dem Einführbereich (16) fixiert ist.

10. Anschlußdose (1) nach einem der vorherigen Ansprüche, wobei das zumindest eine Kontaktelement (11) derart relativ zu dem zumindest einen Öffnungsbereich angeordnet ist, daß die Kraftrichtung (K) und die Einführrichtung (E1) entgegengesetzt sind.

11. Anschlußdose (1) nach einem der vorherigen Ansprüche, wobei die Anschlußkontaktfeder (15) eine Blattfeder ist.

12. Verwendung einer Anschlußdose (1) gemäß einem der vorherigen Ansprüche zum Anordnen an einer Leiterplatte (2), insbesondere an einem Solarmodul, wobei die Anschlußdose (1) an einer Fläche der Leiterplatte (2) angeordnet wird und das zumindest eine Kontaktelement (11) mit zumindest einem elektrischen Leiter (9) des Solarmoduls elektrisch verbunden wird.

13. Solarpaneel umfassend:
- zumindest ein im wesentlichen plattenförmiges Solarmodul (2) und
- zumindest eine Anschlußdose (1) gemäß einem der vorherigen Ansprüche 1 bis 11 wobei das Solarmodul (2) zumindest einen elektrischen Leiter (9) umfaßt und der zumindest eine elektrische Leiter (9) durch einen Öffnungsbereich (7) der Anschlußdose (1) hindurch ragt und mit einem Kontaktelement (11) der Anschlußdose (1) verbunden ist.

14. Kontaktelement (11) zum Anordnen in einer Anschlußdose (1), wobei das Kontaktelement (11) im Inneren der Anschlußdose (1) derart anordenbar ist, daß zumindest ein elektrischer Leiter (9) durch einen Öffnungsbereich (7) in die Anschlußdose (1) einführbar ist und daß das zumindest eine Kontaktelement (11) mit zumindest einem elektrischen Ausgang (6) der Anschlußdose (1) zur Ausgabe von elektrischer Leistung der Leiterplatte (2) elektrisch verbindbar ist, wobei
- das Kontaktelement (11) ausgelegt ist, mit einem flächigen Leiter (9) in Kontakt bringbar zu sein
- das zumindest eine Kontaktelement (11) zumindest eine in einem Einführbereich (16) angeordnete, rückstellfähige Anschlußkontaktfeder (15) umfaßt,
- die zumindest eine Anschlußkontaktfeder (15) durch Anlegen einer Kraft entlang der Kraftrichtung (K) an der Anschlußkontaktfeder (15) derart rückstellfähig betätigbar ist, daß der zumindest eine flächige, elektrische Leiter (9) zumindest bereichsweise zwischen zumindest einem Anschlußkontaktbereich (24) und der zumindest einen Anschlußkontaktfeder (15) anordenbar ist
- **gekennzeichnet dadurch, daß** jedes Kontaktelement (11) konfiguriert ist, daß der zumindest eine flächige, elektrische Leiter (9) mittels der folgenden drei Kontaktkonfigurationen mit dem Kontaktelement (11) in Kontakt bringbar ist:
-- erste Kontaktkonfiguration: das Kontaktelement (11) ist konfiguriert, daß der zumindest eine elektrische Leiter (9) entlang einer ersten Einführrichtung (E1) in den Einführbereich (16) des Kontaktelements (11) einführbar ist und der zumindest eine elektrische Leiter (9) in dem Einführbereich (16) mittels der Anschlußkontaktfeder (15) mit dem Kontaktelement (11) in Kontakt bringbar ist;
-- zweite Kontaktkonfiguration: das Kontaktelement (11) ist konfiguriert, daß der zumindest eine elektrische Leiter (9) entlang einer zweiten Einführrichtung (E2) in den Einführbereich (16) des Kontaktelements (11) einführbar ist und der zumindest eine elektrische Leiter (9) in dem Einführbereich (16) mittels der Anschlußkontaktfeder (15) mit dem Kontaktelement (11) in Kontakt bringbar ist, wobei die erste und die zweite Richtung (E1, E2) voneinander verschieden sind;
-- dritte Kontaktkonfiguration: das Kontaktelement (11) ist konfiguriert, daß der zumindest eine elektrische Leiter (9) mit einer Kontaktvorrichtung (14) des Kontaktelements (11) in Kontakt bringbar ist, wobei die Kontaktvorrichtung (14) außerhalb des Einführbereichs (16) angeordnet ist.

15. Verfahren zum Anordnen einer Anschlußdose (1) gemäß einem der vorherigen Ansprüche 1 bis 11 an einer Leiterplatte (2), insbesondere einem Solarmodul mit dem Schritt:
- Anordnen der Anschlußdose an einer Fläche der Leiterplatte
**gekennzeichnet durch** den Schritt:
- elektrisches Kontaktieren zumindest eines flächigen, elektrischen Leiters (9) der Leiterplatte mit einem Kontaktelement (11) der Anschlußdose, wobei zum elektrischen Kontaktieren zwischen den nachfolgenden drei elektrischen Kontaktiervorgängen gewählt wird:
-- oberer elektrischer Kontaktiervorgang: der zumindest eine elektrische Leiter (9) wird entlang einer ersten Einführrichtung (E1) in den Einführbereich (16) des Kontaktelements (11) eingeführt und der zumindest eine elektrische Leiter (9) wird in dem Einführbereich (16) mittels der Anschlußkontaktfeder (15) mit dem Kontaktelement (11) in Kontakt gebracht;
-- unterer elektrischer Kontaktiervorgang: der zumindest eine elektrische Leiter (9) wird entlang einer zweiten Einführrichtung (E2) in den Einführbereich (16) des Kontaktelements (11) eingeführt und der zumindest eine elektrische Leiter (9) wird in dem Einführbereich (16) mittels der Anschlußkontaktfeder (15) mit dem Kontaktelement (11) in Kontakt gebracht, wobei die erste und die zweite Richtung (E1, E2) voneinander verschieden sind;
-- äußerer elektrischer Kontaktiervorgang: der zumindest eine elektrische Leiter (9) wird mit einer Kontaktvorrichtung (14) des Kontaktelements (11) in Kontakt gebracht, wobei die Kontaktvorrichtung (14) außerhalb des Einführbereichs (16) angeordnet ist.

## Claims

1. A socket (1) for a printed circuit board (2), in particular for a solar module, comprising:
A base support (4) with at least one opening area (7) for introducing at least one electrical conductor (9) of the printed circuit board (2),
at least one contact element (11) for electrical contact with at least one conductor (9) of the printed circuit board (2), wherein the contact element (11) is designed to be able to be brought into contact with a flat conductor (9), and
at least one electrical output (6) for the output of electrical power from the printed circuit board (2) that is electrically connected to the at least one contact element (11),
wherein
- the at least one contact element (11) comprises at least on resettable connection contact spring (15) arranged in an insertion area (16),
- the at least one connection contact spring (15) is resettably actuatable by applying a force along a direction of force (K) to the connection contact spring (15) such that the at least one electrical conductor (9) can be arranged, at least in sections, between at least one connection contact area (24) and the at least one connection contact spring (15), **characterized in that** each contact element (11) is configured such that the at least one flat electrical conductor (9) can be brought into contact with the contact element (11) by means of at least the following three contact configurations:
- first contact configuration: the contact element (11) is configured such that the at least one electrical conductor (9) can be inserted along a first direction of insertion (E1) into the insertion area (16) of the contact element (11), and the at least one electrical conductor (9) can be brought into contact with the contact element (11) in the insertion area (16) by means of the connection contact spring (15);
- second contact configuration: the contact element (11) is configured such that the at least one electrical conductor (9) can be inserted into the insertion area (16) of the contact element (11) along a second direction of insertion (E2), and the at least one electrical conductor (9) can be brought into contact with the contact element (11) in the insertion area (16) by means of the connection contact spring (15), wherein the first and second direction (E1, E2) are different from each other;
- third contact configuration: the contact element (11) is configured such that the at least one electrical conductor (9) can be brought into contact with a contact device (14) of the contact element (11), wherein the contact device (14) is arranged outside of the insertion area (16).

2. The socket (1) according to claim 1, wherein the socket is configured according to the third contact configuration such that the at least one electrical conductor (9) can be inserted along a third direction of insertion (E3) into at least one clamping area (13) of the contact element (11), wherein the third direction of insertion (E3) is different from the first direction of insertion (E1) and/or the second direction of insertion (E2).

3. The socket (1) according to claim 2, wherein the third direction of insertion (E3) is oriented substantially perpendicular to the first direction of insertion (E1).

4. The socket according to one of the prior claims, wherein the contact element is configured such that the at least one electrical conductor (9) can be inserted into the socket (1) along the first direction of insertion (E1) through the at least one opening area (7).

5. The socket (1) according to one of the prior claims, wherein each contact element (11) is designed to accommodate precisely one electrical conductor (9) in the insertion area (16).

6. The socket (1) according to one of the prior claims, wherein the socket (1) is designed such that a plurality of electrical conductors (9) can be inserted into the socket (1) through a common opening area (7), and the electrical conductors (9) can each be brought into contact with one contact element (11) wherein the insertion area (16) is preferably arranged over the at least one opening area (7).

7. The socket (1) according to one of the prior claims, wherein according to the third configuration, the at least one electrical conductor (9) can be soldered to at least one contact device (14) of the contact element (11).

8. The socket (1) according to one of the prior claims, wherein the contact element (11) is designed such that the force along the direction of force (K) can be applied by means of the least one electrical conductor, or by auxiliary means, to the connection contact spring (15).

9. The socket (1) according to one of the prior claims, wherein the at least one connection contact spring (15) is designed to be resettable such that, in an operating position, the electrical conductor (9) and the connection contact spring (15) are in contact, and/or that, in the operating position, the conductor (9) is fixed in the insertion area (16).

10. The socket (1) according to one of the prior claims, wherein the at least one contact element (11) it is arranged relative to the at least one opening area such that the direction of force (K) and the direction of insertion (E1) are opposite.

11. The socket (1) according to one of the prior claims, wherein the connection contact spring (15) is a leaf spring.

12. The use of a socket (1) according to one of the prior claims for arrangement on a printed circuit board (2), especially on a solar module, wherein the socket (1) is arranged on a surface of the printed circuit board (2), and the at least one contact element (11) is electrically connected to at least one electrical conductor (9) of the solar module.

13. A solar panel comprising:
- at least one substantially flat solar module (2), and
- at least one socket (1) according to one of prior claims 1 to 11, wherein the solar module (2) comprises at least one electrical conductor (9), and the at least one electrical conductor (9) extends through an opening area (7) in the socket (1) and is connected to a contact element (11) of the socket (1).

14. A contact element (11) for arrangement in a socket (1), wherein the contact element (11) can be arranged within the interior of the socket (1) such that at least one electrical conductor (9) can be inserted through an opening area (7) into the socket (1), and the at least one contact element (11) can be electrically connected to at least one electrical output (6) of the socket (1) for outputting electrical power from the printed circuit board (2), wherein
- the contact element (11) is designed to be able to be brought into contact with a flat conductor (9),
- the at least one contact element (11) comprises at least one resettable connection contact spring (15) arranged in an insertion area (16),
- the at least one connection contact spring (15) can be resettably actuated by applying a force on the connection contact spring (15) along the direction of force (K) such that the at least one flat electrical conductor (9) can be arranged at least in sections between at least one connection contact area (24) and the at least one connection contact spring (15),
- **characterized in that** each contact element (11) is configured such that the at least one flat electrical conductor (9) can be brought into contact with the contact element (11) by means of the following three contact configurations:
-- first contact configuration: the contact element (11) is configured such that the at least one electrical conductor (9) can be inserted along a first direction of insertion (E1) into the insertion area (16) of the contact element (11), and the at least one electrical conductor (9) can be brought into contact with the contact element (11) in the insertion area (16) by means of the connection contact spring (15);
-- second contact configuration: the contact element (11) is configured such that the at least one electrical conductor (9) can be inserted into the insertion area (16) of the contact element (11) along a second direction of insertion (E2), and the at least one electrical conductor (9) can be brought into contact with the contact element (11) in the insertion area (16) by means of the connection contact spring (15), wherein the first and second direction (E1, E2) are different from each other;
-- third contact configuration: the contact element (11) is configured such that the at least one electrical conductor (9) can be brought into contact with a contact device (14) of the contact element (11), wherein the contact device (14) is arranged outside of the insertion area (16).

15. A method for arranging a socket (1) according to one of the prior claims 1 to 11 on a printed circuit board (2), in particular a solar module with the step:
- arrangement of the socket on a surface of the printed circuit board, **characterized by** the step:
- electrically contacting at least one flat electrical conductor (9) of the printed circuit board to a contact element (11) of the socket, wherein a selection is made between the following three electrical contact procedures for electrical contacting:
-- top electrical contact procedure: the at least one electrical conductor (9) is inserted along a first direction of insertion (E1) into the insertion area (16) of the contact element (11), and the at least one electrical conductor (9) is brought into contact with the contact element (11) in the insertion area (16) by means of the connection contact spring (15);
-- bottom electrical contact procedure: the at least one electrical conductor (9) is introduced along a second direction of insertion (E2) into the insertion area (16) of the contact element (11), and the at least one electrical conductor (9) is brought into contact with the contact element (11) in the insertion area (16) by means of the connection contact spring (15), wherein the first and second direction (E1, E2) are different from each other;
-- outer electrical contact procedure: the at least one electrical conductor (9) is brought into contact with a contact device (14) of the contact element (11), wherein the contact device (14) is arranged outside of the insertion area (16).

## Revendications

1. Boîte de jonction (1) pour une carte de circuits imprimés (2), en particulier pour un module solaire, comprenant :
un support de base (4) avec au moins une zone d'ouverture (7) pour l'introduction d'au moins un conducteur (9) électrique de la carte de circuits imprimés (2),
au moins un élément de contact (11) pour le contact électrique avec au moins un conducteur (9) de la carte de circuits imprimés (2), l'élément de contact (11) étant conçu pour pouvoir être mis en contact avec un conducteur (9) en nappe, et
au moins une sortie électrique (6) pour la délivrance d'une puissance électrique de la carte de circuits imprimés (2) et qui est raccordée électriquement à l'élément de contact (11) au moins au nombre de un,
- l'élément de contact (11) au moins au nombre de un contenant au moins un ressort de contact de raccordement (15) pouvant être rappelé et disposé dans une zone d'introduction (16),
- le ressort de contact de raccordement (15) au moins au nombre de un pouvant être actionné, de façon à pouvoir être rappelé, par l'application d'une force le long d'une direction de force (K) sur le ressort de contact de raccordement (15) de telle sorte que le conducteur (9) électrique au moins au nombre de un peut être disposé, au moins par tronçons, entre au moins une zone de contact de raccordement (24) et le ressort de contact de raccordement (15) au moins au nombre de un,
- **caractérisée en ce que** chaque élément de contact (11) est configuré de sorte que le conducteur (9) électrique en nappe au moins au nombre de un peut être mis en contact avec l'élément de contact (11) au moins au moyen des trois configurations de contact suivantes :
-- première configuration de contact : l'élément de contact (11) est configuré de sorte que le conducteur (9) électrique au moins au nombre de un peut être introduit dans la zone d'introduction (16) de l'élément de contact (11) le long d'une première direction d'introduction (E1), et le conducteur (9) électrique au moins au nombre de un peut, dans la zone d'introduction (16), être mis en contact avec l'élément de contact (11) au moyen du ressort de contact de raccordement (15) ;
-- deuxième configuration de contact : l'élément de contact (11) est configuré de sorte que le conducteur (9) électrique au moins au nombre de un peut être introduit dans la zone d'introduction (16) de l'élément de contact (11) le long d'une deuxième direction d'introduction (E2), et le conducteur (9) électrique au moins au nombre de un peut, dans la zone d'introduction (16), être mis en contact avec l'élément de contact (11) au moyen du ressort de contact de raccordement (15), la première et la deuxième direction (E1, E2) différant l'une de l'autre ;
-- troisième configuration de contact : l'élément de contact (11) est configuré de sorte que le conducteur (9) électrique au moins au nombre de un peut être mis en contact avec un dispositif de contact (14) de l'élément de contact (11), le dispositif de contact (14) étant disposé à l'extérieur de la zone d'introduction (16).

2. Boîte de jonction (1) selon la revendication 1, la boîte de jonction étant configurée selon la troisième configuration de contact de telle sorte que le conducteur (9) électrique au moins au nombre de un peut, le long d'une troisième direction d'introduction (E3), être introduit dans au moins une zone de serrage (13) de l'élément de contact (11), la troisième direction d'introduction (E3) différant de la première direction d'introduction (E1) et/ou de la deuxième direction d'introduction (E2).

3. Boîte de jonction (1) selon la revendication 2, la troisième direction d'introduction (E3) étant essentiellement orientée perpendiculairement à la première direction d'introduction (E1).

4. Boîte de jonction selon une des revendications précédentes, l'élément de contact étant configuré de sorte que le conducteur (9) électrique au moins au nombre de un peut, le long de la première direction d'introduction (E1), être introduit dans la boîte de jonction (1) à travers la zone d'ouverture (7) au moins au nombre de un.

5. Boîte de jonction (1) selon une des revendications précédentes, chaque élément de contact (11) étant conçu pour recevoir précisément un conducteur (9) électrique dans la zone d'introduction (16).

6. Boîte de jonction (1) selon une des revendications précédentes, la boîte de jonction (1) étant conçue de sorte que plusieurs conducteurs (9) électriques peuvent être introduits à travers une zone d'ouverture (7) commune dans la boîte de jonction (1), et les conducteurs (9) électriques pouvant respectivement être mis en contact avec un élément de contact (11), la zone d'introduction (16) étant de préférence disposée au-dessus de la zone d'ouverture (7) au moins au nombre de un.

7. Boîte de jonction (1) selon une des revendications précédentes, le conducteur (9) électrique au moins au nombre de un pouvant, selon la troisième configuration, être assemblé par brasage avec au moins un dispositif de contact (14) de l'élément de contact (11).

8. Boîte de jonction (1) selon une des revendications précédentes, l'élément de contact (11) étant conçu de telle sorte que la force le long de la direction de force (K) peut être appliquée au ressort de contact de raccordement (15) au moyen du conducteur électrique au moins au nombre de un ou par un moyen auxiliaire.

9. Boîte de jonction (1) selon une des revendications précédentes, le ressort de contact de raccordement (15) au moins au nombre de un étant constitué de façon à pouvoir être rappelé de telle sorte que, dans une position de fonctionnement, le conducteur (9) électrique et le ressort de contact de raccordement (15) sont en contact et/ou de telle sorte que, dans la position de fonctionnement, le conducteur (9) est fixé dans la zone d'introduction (16).

10. Boîte de jonction (1) selon une des revendications précédentes, l'élément de contact (11) au moins au nombre de un étant disposé par rapport à la zone d'ouverture au moins au nombre de un de telle sorte que la direction de force (K) et la première direction d'introduction (E1) sont opposées.

11. Boîte de jonction (1) selon une des revendications précédentes, le ressort de contact de raccordement (15) étant un ressort à lame.

12. Utilisation d'une boîte de jonction (1) selon une des revendications précédentes pour la disposition sur une carte de circuits imprimés (2), en particulier sur un module solaire, la boîte de jonction (1) étant disposée sur une surface de la carte de circuits imprimés (2), et l'élément de contact (11) au moins au nombre de un étant raccordé électriquement à au moins un conducteur (9) électrique du module solaire.

13. Panneau solaire, comprenant:
- au moins un module solaire (2) essentiellement en forme de plaque, et
- au moins une boîte de jonction (1) selon une des revendications précédentes 1 à 11, le module solaire (2) comprenant au moins un conducteur (9) électrique, et le conducteur (9) électrique au moins au nombre de un dépassant à travers une zone d'ouverture (7) de la boîte de jonction (1) et étant raccordé à un élément de contact (11) de la boîte de jonction (1).

14. Elément de contact (11) pour la disposition dans une boîte de jonction (1), l'élément de contact (11) pouvant être disposé à l'intérieur de la boîte de jonction (1) de telle sorte qu'au moins un conducteur (9) électrique peut être introduit dans la boîte de jonction (1) à travers une zone d'ouverture (7), et de telle sorte que l'élément de contact (11) au moins au nombre de un peut être raccordé électriquement à au moins une sortie électrique (6) de la boîte de jonction (1) pour la délivrance d'une puissance électrique de la carte de circuits imprimés (2),
- l'élément de contact (11) étant conçu pour être mis en contact avec un conducteur (9) en nappe,
- l'élément de contact (11) au moins au nombre de un comprenant au moins un ressort de contact de raccordement (15) pouvant être rappelé et disposé dans une zone d'introduction (16),
- le ressort de contact de raccordement (15) au moins au nombre de un pouvant être actionné, de façon à pouvoir être rappelé, par l'application d'une force le long de la direction de force (K) sur le ressort de contact de raccordement (15) de telle sorte que le conducteur (9) électrique en nappe au moins au nombre de un peut être disposé, au moins par tronçons, entre au moins une zone de contact de raccordement (24) et le ressort de contact de raccordement (15) au moins au nombre de un,
**caractérisé en ce que**
chaque élément de contact (11) est configuré de sorte que le conducteur (9) électrique en nappe au moins au nombre de un peut être mis en contact avec l'élément de contact (11) au moyen des trois configurations de contact suivantes :
-- première configuration de contact : l'élément de contact (11) est configuré de sorte que le conducteur (9) électrique au moins au nombre de un peut être introduit dans la zone d'introduction (16) de l'élément de contact (11) le long d'une première direction d'introduction (E1), et le conducteur (9) électrique au moins au nombre de un peut, dans la zone d'introduction (16), être mis en contact avec l'élément de contact (11) au moyen du ressort de contact de raccordement (15) ;
-- deuxième configuration de contact : l'élément de contact (11) est configuré de sorte que le conducteur (9) électrique au moins au nombre de un peut être introduit dans la zone d'introduction (16) de l'élément de contact (11) le long d'une deuxième direction d'introduction (E2), et le conducteur (9) électrique au moins au nombre de un peut, dans la zone d'introduction (16), être mis en contact avec l'élément de contact (11) au moyen du ressort de contact de raccordement (15), la première et la deuxième direction (E1, E2) différant l'une de l'autre ;
-- troisième configuration de contact : l'élément de contact (11) est configuré de sorte que le conducteur (9) électrique au moins au nombre de un peut être mis en contact avec un dispositif de contact (14) de l'élément de contact (11), le dispositif de contact (14) étant disposé à l'extérieur de la zone d'introduction (16).

15. Procédé pour la disposition d'une boîte de jonction (1) selon une des revendications précédentes 1 à 11 sur une carte de circuits imprimés (2), en particulier un module solaire, avec l'étape :
- disposition de la boîte de jonction sur une surface de la carte de circuits imprimés, **caractérisé par** l'étape :
- mise en contact électrique d'au moins un conducteur (9) électrique en nappe de la carte de circuits imprimés avec un élément de contact (11) de la boîte de jonction, une sélection étant effectuée entre les trois processus de mise en contact électrique suivants pour la mise en contact électrique :
-- processus de mise en contact électrique supérieur : le conducteur (9) électrique au moins au nombre de un est introduit le long d'une première direction d'introduction (E1) dans la zone d'introduction (16) de l'élément de contact (11), et le conducteur (9) électrique au moins au nombre de un est mis en contact avec l'élément de contact (11) dans la zone d'introduction (16) au moyen du ressort de contact de raccordement (15) ;
-- processus de mise en contact électrique inférieur : le conducteur (9) électrique au moins au nombre de un est introduit le long d'une deuxième direction d'introduction (E2) dans la zone d'introduction (16) de l'élément de contact (11), et le conducteur (9) électrique au moins au nombre de un est mis en contact avec l'élément de contact (11) dans la zone d'introduction (16) au moyen du ressort de contact de raccordement (15), la première et la deuxième direction (E1, E) différant l'une de l'autre ;
-- processus de mise en contact électrique extérieur : le conducteur (9) électrique au moins au nombre de un est mis en contact avec un dispositif de contact (14) de l'élément de contact (11), le dispositif de contact (14) étant disposé à l'extérieur de la zone d'introduction (16).
